(19) Europäisches Patentamt / European Patent Office / Office européen des brevets

(11) **EP 3 866 554 A1**

(12) **EUROPEAN PATENT APPLICATION**

(43) Date of publication:
18.08.2021 Bulletin 2021/33

(51) Int Cl.:
*H04W 76/14* (2018.01)   *H04L 1/18* (2006.01)
*H04W 72/10* (2009.01)   *H04W 72/04* (2009.01)

(21) Application number: 21154659.3

(22) Date of filing: 02.02.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.02.2020   US 202062972843 P
11.02.2020   US 202062972849 P

(71) Applicant: **ASUSTek Computer Inc.**
**Peitou, Taipei-City 112 (TW)**

(72) Inventors:
• **LI, Ming-Che**
**112 Taipei City (TW)**
• **HUANG, Chun-Wei**
**112 Taipei City (TW)**

(74) Representative: **Hoefer & Partner Patentanwälte mbB**
**Pilgersheimer Straße 20**
**81543 München (DE)**

(54) **METHOD AND APPARATUS FOR SCHEDULING DEVICE-TO-DEVICE SIDELINK TRANSMISSION IN A WIRELESS COMMUNICATION SYSTEM**

(57)   A method and apparatus are disclosed from the perspective of a first device performing sidelink transmission. Preferably, the method includes the first device performing sensing on a first sidelink resource pool (1405). The method further includes the first device determining one or more sets of resources based on one or more characteristics or one or more characteristic values associated with the sensing (1410). The method also includes the first device transmitting a signal to at least a second device, wherein the signal indicates the one or more sets of resources and indicates the one or more characteristics or one or more characteristic values for the one or more sets of resources (1415).

FIG. 14

Printed by Jouve, 75001 PARIS (FR)

## Description

This disclosure generally relates to wireless communication networks, and more particularly, to a method and apparatus for scheduling device-to-device sidelink transmission in a wireless communication system.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

## SUMMARY

Methods and apparatus are disclosed from the perspective of a first device and a second device performing sidelink transmission, and are defined in the independent claims. The dependent claims define preferred embodiments thereof. In one embodiment, the method includes the first device performing sensing on a first sidelink resource pool. The method further includes the first device determining one or more sets of resources based on one or more characteristics or one or more characteristic values associated with the sensing. The method also includes the first device transmitting a signal to at least a second device, wherein the signal indicates the one or more sets of resources and indicates the one or more characteristics or one or more characteristic values for the one or more sets of resources.

## BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a diagram according to one exemplary embodiment.

FIG. 6 is a diagram according to one exemplary embodiment.

FIG. 7 is a diagram according to one exemplary embodiment.

FIG. 8 is a diagram according to one exemplary embodiment.

FIG. 9 is a diagram according to one exemplary embodiment.

FIG. 10 is a diagram according to one exemplary embodiment.

FIG. 11 is a diagram according to one exemplary embodiment.

FIG. 12 is a diagram according to one exemplary embodiment.

FIG. 13 is a diagram according to one exemplary embodiment.

FIG. 14 is a flow chart according to one exemplary embodiment.

FIG. 15 is a flow chart according to one exemplary embodiment.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, 3GPP NR (New Radio), or some other modulation techniques.

In particular, the exemplary wireless communication systems devices described below may be designed to support one or more standards such as the standard offered by a consortium named "3rd Generation Partnership Project" referred to herein as 3GPP, including: TS 36.213 V15.4.0 (2018-12), "E-UTRA; Physical layer procedures (Release 15)"; TS 36.214 V15.3.0 (2018-09), "E-UTRA); Physical layer; Measurements (Release 15)"; RP-193257, "New WID on NR sidelink enhancement", LG Electronics; R1-1913680, "Introduction of V2X in NR", Samsung; R1-1913643, "Introduction of NR V2X", Nokia; R1-1913601, "Summary of RAN1 Agreements/Working assumptions in WI 5G V2X with NR sidelink", LG Electronics; and TS 38.321 V15.7.0 (2019-12), "NR; Medium Access Control (MAC) protocol specification (Release 15)". The standards and documents listed above are hereby expressly incorporated by reference in their entirety.

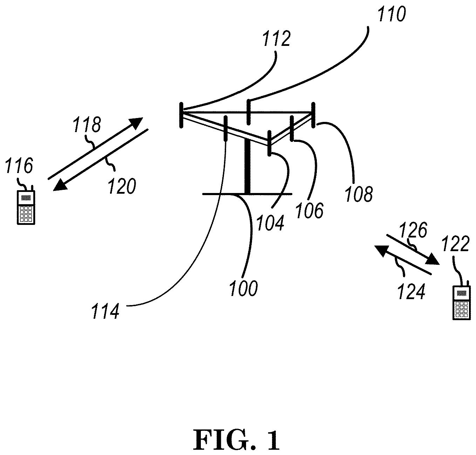

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

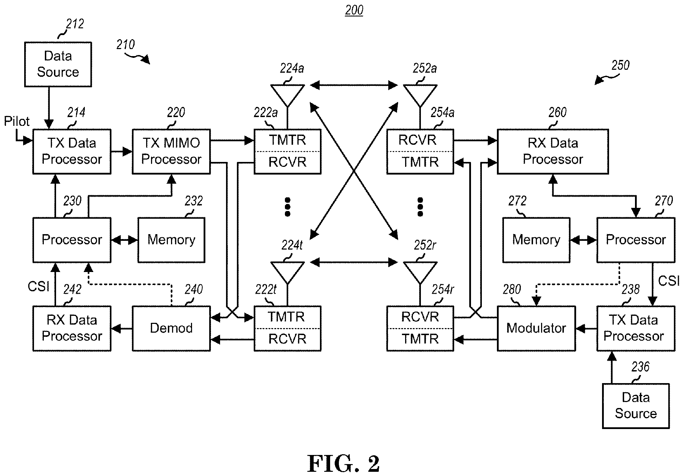

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

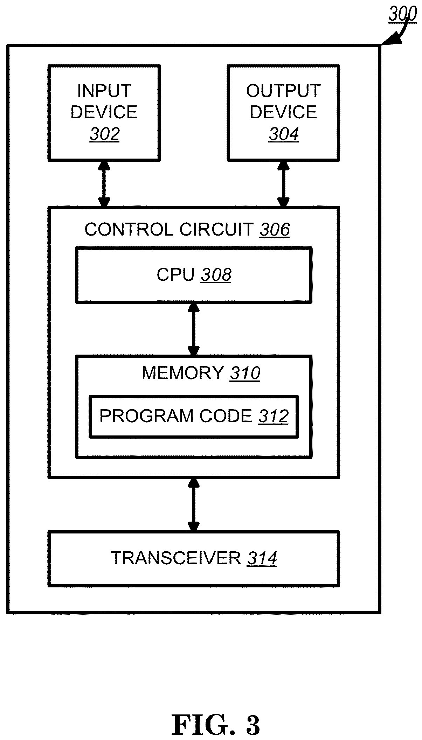

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the NR system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

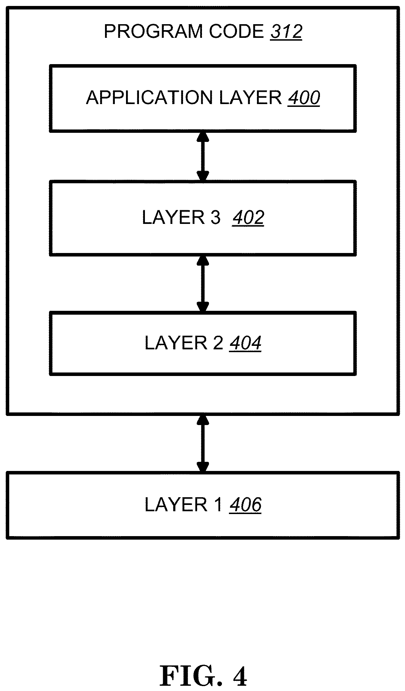

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP TS 36.213 specifies the User Equipment (UE) procedure for Vehicle-to-Everything (V2X) transmission in LTE/LTE-A. The V2X transmissions are performed as sidelink transmission mode 3 or sidelink transmission mode 4 as follows:

**14 UE procedures related to Sidelink**

[...]

**14.1.1.6 UE procedure for determining the subset of resources to be reported to higher layers in PSSCH resource selection in sidelink transmission mode 4 and in sensing measurement in sidelink transmission mode 3**

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers (described in [8]). $C_{resel}$ is determined according to Subclause 14.1.1.4B.

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers (described in [11]). $C_{resel}$ is determined by $C_{resel}$ =10*SL_RESOURCE_RESELECTION_COUNTER, where SL_RESOURCE_RESELECTION_COUNTER is provided by higher layers [11].

[...]

If partial sensing is configured by higher layers then the following steps are used:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j=0,...L_{subCH}-1$. The UE shall determine by its implementation a set of subframes which consists of at least $Y$ subframes within the time interval $[n + T_1, n + T_2]$ where selections of $T_1$ and $T_2$ are up to UE implementations under $T_1 \leq 4$ and $T_{2min}(prio_{TX}) \leq 100$, if $T_{2min}(prio_{TX})$ is provided by higher layers for $prio_{TX}$, otherwise $20 \leq T_2 \leq 100$. UE selection of $T_2$ shall fulfil the latency requirement and $Y$ shall be greater than or equal to the high layer parameter *minNumCandidateSF*. The UE shall assume that any set of $L_{subCH}$ contiguous sub-channels included in the corresponding PSSCH resource pool (described in 14.1.5) within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where $i = a*8+b+1$.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively according to Subclause 14.2.1.
- PSSCH-RSRP measurement according to the received SCI format 1 is higher than $Th_{prio_{TX}, prio_{RX}}$
- the SCI format received in subframe $t_m^{SL}$, or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P_{rsvp\_TX}'}$ for $q=1, 2, ..., Q$ and $j=0, 1, ..., C_{resel}-1$. Here, $Q = \dfrac{1}{P_{rsvp\_RX}}$ if $P_{rsvp\_RX} < 1$ and $y'-m \leq P_{step} \times P_{rsvp\_RX} + P_{step}$, where $t_{y'}^{SL}$ is the last subframe of the $Y$ subframes, and $Q = 1$ otherwise.

6) If the number of candidate single-subframe resources remaining in the set $S_A$ is smaller than $0.2 \cdot M_{total}$, then Step 4 is repeated with $Th_{a,b}$ increased by 3 dB.

7) For a candidate single-subframe resource $R_{x,y}$ remaining in the set $S_A$, the metric $E_{x,y}$ is defined as the linear average of S-RSSI measured in sub-channels $x+k$ for $k=0,...,L_{subCH}-1$ in the monitored subframes in Step 2 that can be expressed by $t_{y-P_{step}*j}^{SL}$ for a non-negative integer j.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10].

The UE shall report set $S_B$ to higher layers.

3GPP TS 36.214 specifies some measurements for sidelink transmission in LTE/LTE-A as follows:

**5.1.29 PSSCH Reference Signal Received Power (PSSCH-RSRP)**

| Definition | PSSCH Reference Signal Received Power (PSSCH-RSRP) is defined as the linear average over the power contributions (in [W]) of the resource elements that carry demodulation reference signals associated with PSSCH, within the PRBs indicated by the associated PSCCH. <br> The reference point for the PSSCH-RSRP shall be the antenna connector of the UE. <br> If receiver diversity is in use by the UE, the reported value shall not be lower than the corresponding PSSCH-RSRP of any of the individual diversity branches |
|---|---|
| Applicable for | RRC_IDLE intra-frequency, <br><br> RRC_IDLE inter-frequency, <br> RRC_CONNECTED intra-frequency, <br> RRC_CONNECTED inter-frequency |

**5.1.30 Channel busy ratio (CBR)**

| Definition | Channel busy ratio (CBR) measured in subframe n is defined as follows: <br> - For PSSCH, the portion of sub-channels in the resource pool whose S-RSSI measured by the UE exceed a (pre-)configured threshold sensed over subframes [*n-100, n-1*]; <br> - For PSCCH, in a pool (pre)configured such that PSCCH may be transmitted with its corresponding PSSCH in non-adjacent resource blocks, the portion of the resources of the PSCCH pool whose S-RSSI measured by the UE exceed a (pre-)configured threshold sensed over subframes [*n-100, n-1*], assuming that the PSCCH pool is composed of resources with a size of two consecutive PRB pairs in the frequency domain. |
|---|---|
| Applicable for | RRC_IDLE intra-frequency, <br><br> RRC_IDLE inter-frequency, <br> RRC_CONNECTED intra-frequency, <br> RRC_CONNECTED inter-frequency |
| • NOTE: The subframe index is based on physical subframe index | |

**5.1.31 Channel occupancy ratio (CR)**

| Definition | Channel occupancy ratio (CR) evaluated at subframe *n* is defined as the total number of sub-channels used for its transmissions in subframes [*n-a,n-1*] and granted in subframes [*n, n+b*] divided by the total number of configured sub-channels in the transmission pool over [*n-a,n+b*]. |
|---|---|
| Applicable for | RRC_IDLE intra-frequency, |

(continued)

|  | RRC_IDLE inter-frequency, RRC_CONNECTED intra-frequency, RRC_CONNECTED inter-frequency |
| --- | --- |

3GPP RP-183257 specifies the Justification and objective of study item on NR V2X as follows:

**3 Justification**

[...]
TSG RAN started discussions in RAN#84 to identify the detailed motivations and work areas for NR sidelink enhancements in Rel-17. Based on the latest summary in RP-192745, significant interest has been observed for the several motivations including the following:

- **Power saving** enables UEs with battery constraint to perform sidelink operations in a power efficient manner. Rel-16 NR sidelink is designed based on the assumption of "always-on" when UE operates sidelink, e.g., only focusing on UEs installed in vehicles with sufficient battery capacity. Solutions for power saving in Rel-17 are required for vulnerable road users (VRUs) in V2X use cases and for UEs in public safety and commercial use cases where power consumption in the UEs needs to be minimized.

- **Enhanced reliability and reduced latency** allow the support of URLLC-type sidelink use cases in wider operation scenarios. The system level reliability and latency performance of sidelink is affected by the communication conditions such as the wireless channel status and the offered load, and Rel-16 NR sidelink is expected to have limitation in achieving high reliability and low latency in some conditions, e.g., when the channel is relatively busy. Solutions that can enhance reliability and reduce latency are required in order to keep providing the use cases requiring low latency and high reliability under such communication conditions.

While several work areas have been identified in the discussion, some important principles were also discussed regarding the 3GPP evolution for NR sidelink. In dealing with different use cases in the evolution of NR sidelink, WGs should strive to achieve maximum commonality between commercial, V2X, and Critical Communication usage of sidelink in order to avoid duplicated solutions and maximize the economy of scale. In addition, enhancements introduced in Rel-17 should be based on the functionalities specified in Rel-16, instead of designing the fundamental NR sidelink functionality again in Rel-17.

**4 Objective**

**4.1 Objective of SI or Core part WI or Testing part WI**

The objective of this work item is to specify radio solutions that can enhance NR sidelink for the V2X, public safety and commercial use cases.
[...]

2. Resource allocation enhancement:

- Specify resource allocation to reduce power consumption of the UEs [RAN1, RAN2]

    - Baseline is to introduce the principle of Rel-14 LTE sidelink random resource selection and partial sensing to Rel-16 NR sidelink resource allocation mode 2.

    - Note: Taking Rel-14 as the baseline does not preclude introducing a new solution to reduce power consumption for the cases where the baseline cannot work properly.

- Study the feasibility and benefit of the enhancement(s) in mode 2 for enhanced reliability and reduced latency in consideration of both PRR and PIR defined in TR37.885 (by RAN#89), and specify the identified solution if deemed feasible and beneficial [RAN1, RAN2]

- Inter-UE coordination with the following until RAN#88.
  ♦ A set of resources is determined at UE-A. This set is sent to UE-B in mode 2, and UE-B takes this into account in the resource selection for its own transmission.

- Note: The study scope after RAN#88 is to be decided in RAN#88.

- Note: The solution should be able to operate in-coverage, partial coverage, and out-of-coverage and to address consecutive packet loss in all coverage scenarios.

- Note: RAN2 work will start after RAN#89.

3. Sidelink DRX for broadcast, groupcast, and unicast [RAN2]

• Define on- and off-durations in sidelink and specify the corresponding UE procedure

• Specify mechanism aiming to align sidelink DRX wake-up time among the UEs communicating with each other

• Specify mechanism aiming to align sidelink DRX wake-up time with Uu DRX wake-up time in an in-coverage UE

Furthermore, 3GPPR1-1913680 states:

**16 UE procedures for sidelink**

A UE is provided by *locationAndBandwidth-SL* a BWP for SL transmissions (SL BWP) with numerology and resource grid determined as described in [4, TS38.211]. For a resource pool within the SL BWP, the UE is provided by *numSubchannel* a number of sub-channels where each sub-channel includes a number of contiguous RBs provided by *subchannelsize.* The first RB of the first sub-channel in the SL BWP is indicated by *startRB-Subchannel.* Available slots for a resource pool are provided by *timeresourcepool* and occur with a periodicity provided by *'periodResourcePool'.* For an available slot without S-SS/PBCH blocks, SL transmissions can start from a first symbol indicated by *startSLsymbols* and be within a number of consecutive symbols indicated by *lengthSLsymbols.* For an available slot with S-SS/PSBCH blocks, the first symbol and the number of consecutive symbols is predetermined.
The UE expects to use a same numerology in the SL BWP and in an active UL BWP in a same carrier of a same cell. If the active UL BWP numerology is different than the SL BWP numerology, the SL BWP is deactivated.
[...]

**16.3 UE procedure for reporting HARQ-ACK on sidelink**

A UE can be indicated by an SCI format scheduling a PSSCH, in one or more sub-channels from a number of $N_{\text{subch}}^{\text{PSSCH}}$ sub-channels, to transmit a PSFCH with HARQ-ACK information in response to the PSSCH reception. The UE provides HARQ-ACK information that includes ACK or NACK, or only NACK.
A UE can be provided, by *periodPSFCHresource,* a number of slots in a resource pool for a period of PSFCH transmission occasion resources. If the number is zero, PSFCH transmissions in the resource pool are disabled.
A UE may be indicated by higher layers to not transmit a PSFCH in response to a PSSCH reception [11, TS 38.321].
If a UE receives a PSSCH in a resource pool and a ZYX field in a SCI format 0_2 scheduling the PSSCH reception indicates to the UE to report HARQ-ACK information for the PSSCH reception [5, TS 38.212], the UE provides the HARQ-ACK information in a PSFCH transmission in the resource pool. The UE transmits the PSFCH in a first slot that includes PSFCH resources and is at least a number of slots, provided by *MinTimeGapPSFCH,* of the resource pool after a last slot of the PSSCH reception.

A UE is provided, by *rbSetPSFCH,* a set of $M_{\text{PRB, set}}^{\text{PSFCH}}$ PRBs in a resource pool for PSFCH transmission in a PRB of the resource pool. For a number of $N_{\text{subch}}$ sub-channels for the resource pool, provided by *numSubchannel,* and a number of $N_{\text{PSSCH}}^{\text{PSFCH}}$ PSSCH slots associated with a PSFCH slot, provided by *periodPSFCHresource,* the UE allocates the $[(i + j \cdot N_{\text{PSSCH}}^{\text{PSFCH}}) \cdot M_{\text{subch, slot}}^{\text{PSFCH}}, (i + 1 + j \cdot N_{\text{PSSCH}}^{\text{PSFCH}}) \cdot M_{\text{subch, slot}}^{\text{PSFCH}} - 1]$ PRBs from the $M_{\text{PRB, set}}^{\text{PSFCH}}$ PRBs to slot *i* and sub-channel *j*, where $M_{\text{subch, slot}}^{\text{PSFCH}} = M_{\text{PRB, set}}^{\text{PSFCH}} / (N_{\text{subch}} \cdot N_{\text{PSSCH}}^{\text{PSFCH}}), \quad 0 \leq i < N_{\text{PSSCH}}^{\text{PSFCH}}, \quad 0 \leq j < N_{\text{subch}},$ and the allocation starts in an ascending order of *i* and continues in an ascending order of *j*.

A UE determines a number of PSFCH resources available for multiplexing HARQ-ACK information in a PSFCH transmission as $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$ where $N_{\text{CS}}^{\text{PSFCH}}$ is a number of cyclic shift pairs for the resource pool and, based on an indication by higher layers,

- $N_{\text{type}}^{\text{PSFCH}} = 1$ and the $M_{\text{subch, slot}}^{\text{PSFCH}}$ PRBs are in one sub-channel

- $N_{\text{type}}^{\text{PSFCH}} = N_{\text{subch}}^{\text{PSSCH}}$ and the $N_{\text{subch}}^{\text{PSSCH}} \cdot M_{\text{subch, slot}}^{\text{PSFCH}}$ are located in one or more sub-channels from the $N_{\text{subch}}^{\text{PSSCH}}$ sub-channels

The UE applies one cyclic shift from a cyclic shift pair to a sequence used for the PSFCH transmission [4, TS 38.211]. The PSFCH resources are first indexed according to an ascending order of the PRB index, from the $N_{\text{type}}^{\text{PSFCH}} \cdot M_{\text{subch, slot}}^{\text{PSFCH}}$ PRBs, and then according to an ascending order of the cyclic shift pair index from the $N_{\text{CS}}^{\text{PSFCH}}$ cyclic shift pairs.

A UE determines an index of a PSFCH resource for a PSFCH transmission in response to a PSSCH reception, using a sequence associated with the resource pool [4, TS 38.211], as $(P_{\text{ID}} + M_{\text{ID}}) \bmod R_{\text{PRB, CS}}^{\text{PSFCH}}$ where $P_{\text{ID}}$ is a physical layer source ID provided by SCI format 0-2 [5, TS 38.212] scheduling the PSSCH reception, $M_{\text{ID}}$ is zero or $M_{\text{ID}}$ is the identity of the UE receiving the PSSCH as indicated by higher layers.

[...]

A UE can be provided a number of symbols in a resource pool, by *timeResourcePSCCH,* starting from a second symbol that is available for SL transmissions in a slot, and a number of PRBs in the resource pool, by *frequencyResourcePSCCH,* for a PSCCH transmission with a SCI format 0_1.

In addition, 3GPP R1-1913643 states:

**8 Physical sidelink shared channel related procedures**

[...]

In the frequency domain, a sidelink resource pool consists of *numSubchannel* contiguous sub-channels. A sub-channel consists of *subchannelsize* contiguous PRBs, where *numSubchannel* and *subchannelsize* are higher layer parameters.

[...]

Each PSSCH transmission is associated with a PSCCH transmission.

That PSCCH transmission carries the 1st stage of the SCI associated with the PSSCH transmission; the 2nd stage of the associated SCI is carried within the resource of the PSSCH.

If the UE transmits SCI format 0-1 on PSCCH according to a PSCCH resource configuration in slot *n* and PSCCH resource *m*, then for the associated PSSCH transmission in the same slot

[...]

The UE shall transmit the PSSCH in the same slot as the associated PSCCH.

The minimum resource allocation unit in the time domain is a slot.

[...]

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;

- L1 priority, $prio_{TX}$;

- the remaining packet delay budget;

- the number of sub-channels to be used for the PSSCH/PSCCH transmission in a slot, $L_{subCH}$;

- optionally, the resource reservation interval, $P_{rsvp\_TX}$, in units of ms.

The following higher layer parameters affect this procedure:

- *t2min_SelectionWindow:* internal parameter $T_{2min}$ is set to the corresponding value from higher layer parameter *t2min_SelectionWindow* for the given value of $prio_{TX}$.

- *SL-ThresRSRP_pi_pj:* this higher layer parameter provides an RSRP threshold for each combination $(p_i, p_j)$, where $p_i$ is the value of the priority field in a received SCI format 0-1 and $p_j$ is the priority of the transmission of the UE selecting resources; for a given invocation of this procedure, $p_j = prio_{TX}$.

- *RSforSensing* selects if the UE uses the PSSCH-RSRP or PSCCH-RSRP measurement, as defined in subclause 8.4.2.1.

- *reservationPeriodAllowed*

- *t0_SensingWindow:* internal parameter $T_0$ is defined as the number of slots corresponding to *t0_SensingWindow* ms.

The resource reservation interval, $P_{rsvp\_TX}$, if provided, is converted from units of *ms* to units of logical slots, resulting in $P'_{rsvp\_TX}$.

Notation:

$\left(t_0^{SL}, t_1^{SL}, t_2^{SL}, \dots\right)$ denotes the set of slots which can belong to a sidelink resource pool and is defined in [TBD].

The following steps are used:

1) A candidate single-slot resource for transmission $R_{x,y}$ is defined as a set of $L_{subCH}$ contiguous sub-channels with sub-channel $x+j$ in slot $t_y^{SL}$ where $j = 0,...,L_{subCH}$ - 1. The UE shall assume that any set of $L_{subCH}$ contiguous sub-channels included in the corresponding resource pool within the time interval $[n + T_1, n + T_2]$ correspond to one candidate single-slot resource, where

- selection of $T_1$ is up to UE implementation under $0 \le T_1 \le T_{proc,1}$, where $T_{proc,1}$ is TBD;

- If $T_{2min}$ is shorter than the remaining packet delay budget (in slots) then $T_2$ is up to UE implementation subject to $T_{2min} \le T_2 \le$ remaining packet budget (in slots);

otherwise $T_2$ is set to the remaining packet delay budget (in slots).
The total number of candidate single-slot resources is denoted by $M_{total}$.

2) The sensing window is defined by the range of slots $[n - T_0, n-T_{proc,0})$ where $T_0$ is defined above and $T_{proc,1}$ is TBD. The UE shall monitor slots which can belong to a sidelink resource pool within the sensing window except for those in which its own transmissions occur. The UE shall perform the behaviour in the following steps based on PSCCH decoded and RSRP measured in these slots.

3) The internal parameter $Th(p_i)$ is set to the corresponding value from higher layer parameter *SL-ThresRSRP_pi_pj* for $p_j$ equal to the given value of $prio_{TX}$ and each priority value $p_i$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t_m^{SL}$ in Step 2.

- for any periodicity value allowed by the higher layer parameter *reservationPeriodAllowed* and a hypothetical SCI format 0-1 received in slot $t_m^{SL}$ with "Resource reservation period" field set to that periodicity value and indicating all subchannels of the resource pool in this slot, condition c in step 6 would be met.

6) The UE shall exclude any candidate single-slot resource $R_{x,y}$ from the set $S_A$ if it meets all the following conditions:

a. the UE receives an SCI format 0-1 in slot $t_m^{SL}$, and "Resource reservation period" field, if present, and "Priority" field in the received SCI format 0-1 indicate the values $P_{rsvp\_RX}$ and $prio_{RX}$, respectively according to Subclause [TBD] in [6, TS 38.213];

b. the RSRP measurement performed, according to subclause 8.4.2.1 for the received SCI format 0-1, is higher than $Th(prio_{RX})$;

c. the SCI format received in slot $t_m^{SL}$, or the same SCI format which, if and only if the "Resource reservation period" field is present in the received SCI format 0-1, is assumed to be received in slot(s) $t_{m+q \times P'_{rsvp\_RX}}^{SL}$ determines according to subclause [TBD] in [6, TS 38.213] the set of resource blocks and slots which overlaps with $R_{x,y+j \times P'_{rsvp\_TX}}$ for q=1, 2, ..., Q and j=0, 1, ..., $C_{resel}$ - 1. Here, $P'_{rsvp\_RX}$ is $P_{rsvp\_RX}$ converted to units of logical slots, $Q = \left\lceil \frac{T_{scal}}{P_{rsvp\_RX}} \right\rceil$ if $P_{rsvp\_RX}$ < $T_{scal}$ and n' - m $\leq$ $P'_{rsvp\_RX}$, where $t_{n'}^{SL} = n$ if slot n belongs to the set $\left( t_0^{SL}, t_1^{SL}, \ldots, t_{Tmax}^{SL} \right)$, otherwise slot $t_{n'}^{SL}$ is the first slot after slot n belonging to the set $\left( t_0^{SL}, t_1^{SL}, \ldots, t_{Tmax}^{SL} \right)$; otherwise Q = 1. $T_{scal}$ is FFS.

7) If the number of candidate single-slot resources remaining in the set $S_A$ is smaller than 0.2 · $M_{total}$, then $Th(p_i)$ is increased by 3 dB for each priority value $Th(p_i)$ and the procedure continues with step 4.

The UE shall report set $S_A$ to higher layers.

[...]

For sidelink resource allocation mode 1, a UE upon detection of SCI format 0-1 on PSCCH can decode PSSCH according to the detected SCI format 0-2, and associated PSSCH resource configuration configured by higher layers.

For sidelink resource allocation mode 2, a UE upon detection of SCI format 0-1 on PSCCH can decode PSSCH according to the detected SCI format 0-2, and associated PSSCH resource configuration configured by higher layers.

Also, 3GPP R1913601 states:

Agreements:

• At least for transmission perspective of a UE in a carrier, at least TDM between PSCCH/PSSCH and PSFCH is allowed for a PSFCH format for sidelink in a slot.

[...]

Agreements:

• NR V2X supports an initial transmission of a TB without reservation, based on sensing and resource selection procedure

- NR V2X supports reservation of a sidelink resource for an initial transmission of a TB at least by an SCI associated with a different TB, based on sensing and resource selection procedure

[...]

Agreements:

- It is supported, in a resource pool, that within the slots associated with the resource pool, PSFCH resources can be (pre)configured periodically with a period of N slot(s)
  o N is configurable, with the following values

    - 1

    - At least one more value >1

[...]

Agreements:

- Support at least NR CBR as congestion metric for NR sidelink congestion control.
  o LTE CBR is the baseline for defining NR CBR.

[...]

Agreements:

- For the period of N slot(s) of PSFCH resource, N=2 and N=4 are additionally supported.

Agreements:

- For a PSSCH transmission with its last symbol in slot n, when the corresponding HARQ feedback is due for transmission, it is expected to be in slot n+a where a is the smallest integer larger than or equal to K with the condition that slot n+a contains PSFCH resources.

[...]

Agreements:

- The resource (re-)selection procedure includes the following steps

    o Step 1: Identification of candidate resources within the resource selection window
    - FFS details

    o Step 2: Resource selection for (re-)transmission(s) from the identified candidate resources
    - FFS details

Agreements:

- In Step 1 of the resource (re-)selection procedure, a resource is not considered as a candidate resource if:
  o The resource is indicated in a received SCI and the associated L1 SL-RSRP measurement is above an SL-RSRP threshold
    - The SL-RSRP threshold is at least a function of the priority of the SL transmission indicated in the received SCI and the priority of the transmission for which resources are being selected by the UE

[...]

Working assumption in [98-NR-12]:

- For SL-RSRP measurement/reporting for open-loop power control for PSCCH/PSSCH:
  o UE receiving RS for SL-RSRP measurement reports a filtered SL-RSRP (to be selected between L1-filtered SL-RSRP and L3-filtered SL-RSRP)

[...]

Agreements:

- For PSCCH/PSSCH multiplexing option 3, one CBR measurement over a resource pool is defined.
  o PSFCH resources, if (pre)configured, are excluded from this CBR measurement.

[...]

Agreements:

- Support {10, 15, 20, 25, 50, 75, 100} PRBs for possible sub-channel size.

[...]

Agreements:

- In Step 1, initial L1 SL-RSRP threshold for each combination of $p_i$ and $p_j$ is (pre-)configured, where $p_i$ - priority indication associated with the resource indicated in SCI and $p_j$ - priority of the transmission in the UE selecting resources

Agreements:

- In Step 1, when the ratio of identified candidate resources to the total number of resources in a resource selection window, is less than X%, all configured thresholds are increased by Y dB and the resource identification procedure is repeated

  o FFS value(s)/configurability of X
  ▪ At least one value of X=20

  o Y=3

Agreements:

- Support a resource pre-emption mechanism for Mode-2
  o A UE triggers reselection of already signaled resource(s) as a resource reservation in case of overlap with resource(s) of a higher priority reservation from a different UE and, SL-RSRP measurement associated with the resource reserved by that different UE is larger than an associated SL-RSRP threshold
  ▪ Only the overlapped resource(s) is/are reselected

[...]

Agreements:

- L3-filtered sidelink RSRP reporting (from RX UE to TX UE) for open-loop power control for PSCCH/PSSCH uses higher layer signaling.

Agreements:

- For SL-RSRP measurement for SL open-loop power control, PSSCH DMRS is used

[...]

Agreements:

- For PSSCH-to-HARQ feedback timing, K is the number of logical slots (i.e. the slots within the resource pool)

[...]

Agreements:
Define NR sidelink Channel Occupancy Ratio (CR) measurement.

- LTE CR is the baselines

Agreements:
• Congestion control can restrict the values of at least the following PSSCH/PSCCH TX parameters per resource pool:

o Range of MCS for a given MCS table supported within the resource pool

o Range of number of sub-channels

o Upper bound of number of (re)transmissions - already agreed in mode 2 AI

o Upper bound of TX power (including zero TX power)

• Congestion control can set an upper bound on channel occupancy ratio (CR), $CR_{limit}$.

• Ranges/bounds of the transmission parameters and $CR_{limit}$ are functions of QoS and CBR.

• In addition to congestion control (in use or not in use), the above parameters can be restricted by reusing the same mechanism as in LTE

o For speed, further discussion on absolute vs. relative speed

o FFS other parameter(s) that can be restricted

o FFS whether or not to tie the speed with a UE capability

Agreements:
Lookup table links CBR range with values of the transmission parameters and $CR_{limit}$ for each value of the indication of a priority of a sidelink transmission carried by SCI payload (as per WA from RAN1#98), Lookup table is (pre)configured. Details up to RAN2.

- Up to 16 (as a working assumption) CBR ranges are supported

[...]

Agreements:

- Sidelink RSSI (SL-RSSI) measurement is used for CBR estimation

Agreements:
A sidelink resource is busy for the purpose of CBR measurement if Sidelink RSSI measured by the UE in that resource exceeds a (pre-)configured threshold.
[...]

Email approval in [98b-NR-16]:

Agreements:

- For a given time instance n when resource (re-)selection and re-evaluation procedure is triggered

o The resource selection window starts at time instance (n + T1), T1 $\geq$ 0 and ends at time instance (n + T2)

- The start of selection window T1 is up to UE implementation subject to $T1 \leq T_{proc,1}$
  - T2 is up to UE implementation with the following details as a working assumption:

  - $T2 \geq T2_{min}$

  - If $T2_{min}$ > Remaining PDB, then $T2_{min}$ is modified to be equal to Remaining PDB

    - UE selection of T2 shall fulfil the latency requirement, i.e. $T2 \leq$ Remaining PDB

  o A sensing window is defined by time interval [n - T0, n - $T_{proc,0}$)
    - T0 is (pre-)configured, T0 > $T_{proc,0}$ FFS further details

[...]
- For a PSFCH format,
  o In the symbols that can be used for PSFCH transmissions in a resource pool, a set of frequency resources is (pre-)configured for the actual use of PSFCH transmissions (i.e., PSFCH transmissions do not happen in other frequency resources).
    - This (pre)configuration includes the case where all the frequency resources in a resource pool are available for the actual PSFCH transmission.
  [...]

Agreements:

- Repetition of PSFCH format 0 (one-symbol PSFCH format agreed in RAN1#97) to two consecutive symbols is used.

  o This implies that, two consecutive symbols are always used for transmission of PSFCH format 0.

  o Note: The first symbol can be used for AGC training.

[...]
Agreements:

- One symbol is used for gap right after PSSCH transmission.

- One symbol is used for gap right after PSFCH transmission.

[...]
Agreements:

- For Rel-16, (normal CP)
  o Support 7, 8, 9,..., 14 symbols in a slot without SL-SSB for SL operation

- There is a single (pre-)configured length of SL symbols in a slot without SL-SSB per SL BWP.

- There is a single (pre-)configured starting symbol for SL in a slot without SL-SSB per SL BWP.

[...]
Agreements:

- The first proposal under Wed. session in R1-1913450 is agreed, with one clarification that S is the number of sub-channels in the resource pool

First proposal under Wed. session in R1-193450:

- For mode 1 and mode 2, for the time-frequency resource indication in the SCI:

  o $N_{MAX}$ = 2

- ▪ Frequency

$$\sum_{m=1}^{S}(S+1-m) = \frac{S(S+1)}{2}$$ code-points, indicating starting sub-channel of the second resource and number of sub-channels of both resources

$$\left\lceil \log_2\left(\frac{S(S+1)}{2}\right) \right\rceil \text{ bit}$$

- ▪ Time

    - 1 code-point indicates no reserved resource

    - 31 code-points indicate different time position of the second resource within 32 slots

    - 5 bit

o $N_{MAX} = 3$

- ▪ Frequency

    - Option 2-f-a: joint coding

        $$\sum_{m=1}^{S}(S+1-m)^2 = \frac{S(S+1)(2S+1)}{6}$$ code-points indicating starting sub-channel of the second resource, starting sub-channel of the third resource, and the number of sub-channels of all resources

        $$\left\lceil \log_2\left(\frac{S(S+1)(2S+1)}{6}\right) \right\rceil \text{ bit}$$

- ▪ Time

    - Option 2-t-a: joint coding

        o 1 code-point indicates no reserved resource

        o 31 code-points indicate different time position of the second resource within 32 slots, when no third resource is reserved

        o 30 + 29 +...+ 1 = 465 code-points indicate different time position of two resources within 32 slots

        o 9 bit

Agreements:

- On a per resource pool basis, when reservation of a sidelink resource for an initial transmission of a TB at least by an SCI associated with a different TB is enabled:

    o A period is additionally signalled in SCI and the same reservation is applied with respect to resources indicated within $N_{MAX}$ within window W at subsequent periods
    o A set of possible period values is the following: 0, [1:99], 100, 200, 300, 400, 500, 600, 700, 800, 900, 1000 ms

- <= 4 bits are used in SCI to indicate a period
- An actual set of values is (pre-)configured

o Regarding the number of periods
- The number of remaining periodic reservations is not explicitly indicated in SCI
o (working assumption) Procedure of mapping of periodic semi-persistent resources into the resource selection window is reused from LTE
- By reusing TS 36.213, section 14.1.1.6, steps 5 and 6 of non-partial sensing, as applicable
o (working assumption) Procedure of triggering periodic semi-persistent resources reselection based on reselection counter and keep probability is reused from LTE
- By reusing definition and procedure of $C_{resel}$ defined in TS 36.213, as applicable

Agreements:

- $T2_{min}$ is (pre-)configured per priority indicated in SCI from the following set of values:
  o {1, 5, 10, 20}*$2^{\mu}$, where $\mu$ = 0,1,2,3 for SCS 15,30,60,120 respectively

Agreements:

- In Step 2, randomized resource selection from the identified candidate resources in the selection window is supported

Agreements:

- T0 is (pre)-configured between: 1000+[100]ms and [100]ms

Agreements:
Support (pre)-configuration per resource pool between:

- L1 SL-RSRP measured on DMRS of PSSCH after decoding of associated 1st stage SCI, or
- L1 SL-RSRP measured on DMRS of PSCCH for 1st SCI after decoding of associated 1st stage SCI

[...]
Agreements:
The CBR measurement time window size is 100 ms and 100 slots by (pre-)configuration.
CR window size is { 1000 ms, 1000 slots } by (pre)-configuration

3GPP 38.321 introduces Sidelink Control Information (SCI) format as follows:

**8.3 Sidelink control information on PSCCH**

SCI carried on PSCCH is a 1st-stage SCI, which transports sidelink scheduling information.

**8.3.1 1st-stage SCI formats**

[...]

**8.3.1.1 SCI format 0-1**

SCI format 0-1 is used for the scheduling of PSSCH and 2nd-stage-SCI on PSSCH
The following information is transmitted by means of the SCI format 0-1:

- Priority - 3 bits.

- Frequency resource assignment - $\left\lceil \log_2\left(\frac{N_{\text{subChannel}}^{\text{SL}}\left(N_{\text{subChannel}}^{\text{SL}} + 1\right)}{2}\right)\right\rceil$ bits when the value of the higher layer parameter *maxNumResource* is configured to 2; otherwise $\left\lceil \log_2 \left( \frac{N_{\text{subChannel}}^{\text{SL}} \left( N_{\text{subChannel}}^{\text{SL}} + 1 \right) \left( 2 N_{\text{subChannel}}^{\text{SL}} + 1 \right)}{6} \right) \right\rceil$ bits when the value of the higher layer parameter *maxNumResource* is configured to 3.

- Time resource assignment - 5 bits when the value of the higher layer parameter *maxNumResource* is configured to 2; otherwise 9 bits when the value of the higher layer parameter *maxNumResource* is configured to 3.

- Resource reservation period - $\lceil \log_2(N_{\text{reservPeriod}}) \rceil$ bits, if higher parameter *reserveResourceDifferentTB* is configured; 0 bit otherwise.

- DMRS pattern - [x] bits, if more than one DMRS patterns are configured by higher layer parameter *TimePatternPsschDmrs;* 0 bit otherwise.

- 2nd-stage SCI format - [x] bits

- Beta_offset indicator- [2] bits

- Number of DMRS port - 1 bit

- Modulation and coding scheme - 5 bits

- Reserved - [2 - 4] bits as determined by higher layer parameter *[XXX],* with value set to zero.

[...]

**8.4 Sidelink control information on PSSCH**

SCI carried on PSSCH is a 2nd-stage SCI, which transports sidelink scheduling information.

**8.4.1 2nd-stage SCI formats**

[...]

**8.4.1.1 SCI format 0-2**

SCI format 0-2 is used for the decoding of PSSCH.
The following information is transmitted by means of the SCI format 0-2:

- HARQ Process ID - [x] bits

- New data indicator - 1 bit

- Redundancy version - 2 bits

- Source ID - 8 bits

- Destination ID - 16 bits

- CSI request - 1 bit

If the 2nd-stage SCI format field in the corresponding SCI format 0-1 indicates type 1 groupcast as defined in subclause x.x.x of [6, TS 38.214], the following fields are present:

- Zone ID - [x] bits

- Communication range requirement - [4] bits

[...]

**8.4.5 Multiplexing of coded 2nd-stage SCI bits to PSSCH**

The coded 2nd-stage SCI bits are multiplexed onto PSSCH according to the procedures in Subclause 8.2.1.
One or multiple of following terminologies may be used hereafter:

- *BS:* A network central unit or a network node in NR which is used to control one or multiple TRPs which are associated with one or multiple cells. Communication between BS and TRP(s) is via fronthaul. BS could also be referred to as central unit (CU), eNB, gNB, or NodeB.

- *TRP:* A transmission and reception point provides network coverage and directly communicates with UEs. TRP could also be referred to as distributed unit (DU) or network node.

- *Cell:* A cell is composed of one or multiple associated TRPs, i.e. coverage of the cell is composed of coverage of all associated TRP(s). One cell is controlled by one BS. Cell could also be referred to as TRP group (TRPG).

- *NR-PDCCH:* A channel carries downlink control signal which is used to control communication between a UE and a network side. A network transmits NR-PDCCH on configured control resource set (CORESET) to the UE.

- *Slot:* A scheduling unit in NR. Each slot duration is 14 OFDM symbols.

- *Mini-slot:* A mini-slot is a scheduling unit with duration less than 14 OFDM symbols.

In the Justification and objective of work item for NR Rel-17 V2X (discussed in 3GPP RP-193257, inter-UE coordination is one of enhancement for study. The Concept may comprise that UE-A may determine or acquire a set of sidelink resources, and then send the set to UE-B. The UE-B may take this into account in the resource selection for its own transmission. Alternatively, the UE-B may utilize the set of sidelink resource for its own transmission.
Assume UE-A and UE-B are in the same sidelink connection, the sidelink connection may be unicast link/connection or groupcast link/connection. There are several potential benefits to support inter-UE coordination. For example, the UE-B may not (need to) perform resource sensing and selection. It helps UE-B to reduce power consumption, especially if the UE-B has battery constraint and needs to perform sidelink operations in a power efficient manner. As another example, if the UE-A has battery constraint and needs to perform sidelink DRX procedure, the UE-A can send a set of resources to the UE-B, wherein the UE-A will wake up in the timings of the set of resources. The UE-A may determine or derive the set of resources based on its active time of sidelink DRX procedure. As another example, the UE-A may be a scheduling UE or leader UE of a sidelink group. The UE-A can assign or schedule separate sets of sidelink resources for different member UEs in the same sidelink group. With UE-A scheduling or assignment, some half-duplex issue can be solved or reduced or released. The UE-A can ensure at most one member UE performing groupcast sidelink transmission to the sidelink group in one TTI.
In NR Rel-16, sidelink V2X is introduced to support more and more sidelink services. In order to handle the more and more services, Rel-16 NR sidelink V2X may provide a common solution for addressing the more and more services and associated scenario. However, some specific services may require more stringent requirement, comparing to current sidelink mechanism. For example, some services like video sharing, platooning or remote driving may need fast data packet transmission with a higher reception reliability. Hence, how to improve reliability and/or latency may need to be solved.

Concept 1

One general concept of the invention is that a second device receives a signal from a first device with a first identity (via PC5-interface). The signal may indicate a set of resource(s) in a sidelink resource pool. The source identity for the signal may be the first identity. The second device could be triggered by higher layer (of the second device) to perform sidelink transmission. Higher layer of the second device could derive a second identity as a destination for the sidelink transmission. The second device may exclude a candidate timing for the sidelink transmission based on the signal (regardless of Reference Signal Reference Power (RSRP) and/or priority indicated of the signal). The second device could derive whether to exclude a candidate resource or timing based on the signal, via whether target device of the sidelink transmission comprises the first device. If or when the target device of the sidelink transmission comprises the first device, the second device excludes a candidate resource or timing based on the signal.
The second device could derive whether to exclude a candidate resource or timing based on the signal via whether the second identity is the same as the first identity or the second identity comprises the first device as a target device of the sidelink transmission. The second device could be (pre-)configured whether to exclude a candidate resource or timing based on target device(s)'s the signal(s) at least including the first device's (previous) one or more signal(s).

The second device may receive one or more the signals from the first device, wherein each from the one or more the signals could indicate a set of resource(s). When the second device performs resource selection, the second device would determine, whether to exclude resource(s) or timing(s) indicated by the one or more the signals, based on the destination for the sidelink transmission.

When or if the second device determines to perform resource selection or perform resource exclusion for a candidate resource based on the signal, the second device could check whether the candidate resource or preferable the candidate resource with one or more reserved periods is overlapped with the set of resources (in time domain) or not. If the candidate resource or preferable the candidate resource with one or more reserved periods is overlapped with the set of resources (in time domain), the second device may exclude the candidate resource.

The signal could indicate a set of timings in the sidelink resource pool, scheduling information for the set of resources, and/or the first device's intended transmitting timing(s) or resource(s). The signal could also indicate the first device's unintended received timing(s) or resource(s), and/or the first device's reserved timing(s) or resource(s) for performing sidelink transmission. Furthermore, the signal could indicate higher interference resource(s) and/or timing(s) (from the first device's view).

The signal could be a first stage SCI (e.g., SCI format 0-1) and/or an associated second stage SCI (e.g., SCI format 0-2) and/or Physical Sidelink Shared Channel (PSSCH) in a same slot or timing. The signal could be transmitted via one or more Medium Access Control (MAC) Control Element (CE), and/or a Radio Resource Control (RRC) signaling.

The signal could indicate the set of timings or resource(s) by a reserved period and/or a time gap. The signal could also indicate a destination identity. The destination identity may not comprise the second device. In other words, the second device may not receive the scheduling PSSCH based on the signal. The destination identity may be a groupcast identity of a group not comprising the second device. Alternatively, the destination identity may comprise the second device. The destination identity may be the second identity. The destination identity may be a groupcast identity of a group comprising the second device.

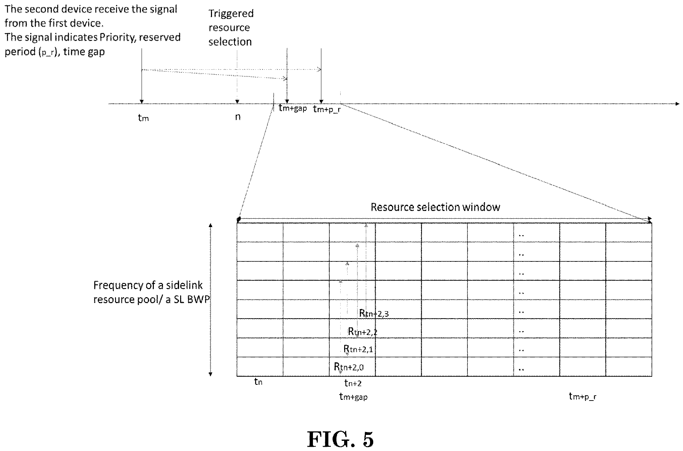

As shown in FIG. 5, a second device receives a signal in a slot with index tm and the signal indicates a reserved period (which is in unit of slot in a sidelink resource pool) and/or a priority and/or a time gap. The signal may indicate the target device does not comprise the second device. The second device is triggered to select one or more candidate resources with consecutive five sub-channels for performing a sidelink transmission. The sidelink transmission is unicast to the first device or is groupcast to a group comprising the first device or is broadcast. The second device would exclude one or more candidate resource(s) in the resource selection window based on the signal from the first device. In this example, since the signal indicates the slot with index $t_{m+gap}$ and/or in the slot with index $t_{m+p\_r}$ (which means the first device will perform sidelink transmission), the second device would exclude the candidate resource(s) in these two slots. In this example, candidate resource(s) $R_{tn+2,0}$, $R_{tn+2,1}$, $R_{tn+2,2}$, $R_{tn+2,3}$ are excluded when the second device perform resource selection. Preferably, a candidate resource Rx,y means that the candidate resource starts from sub-channel y and in the slot with index x.

Text proposal

---

In resource allocation mode 2, the higher layer can request the UE to determine a subset of resources from which the higher layer will select resources for PSSCH/PSCCH transmission. To trigger this procedure, in slot *n,* the higher layer provides the following parameters for this PSSCH/PSCCH transmission:

- the resource pool from which the resources are to be reported;
- L1 priority, *prio_TX*;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of ms.
- <u>optionally, L1 destination ID.</u>

The resource reservation interval, $P_{rsvp\_TX}$, if provided, is converted from units *of ms* to units of logical slots, resulting in $P'_{rsvp\_TX}$.

Notation:

---

(continued)

| |
|---|
| $(t_0^{SL}, t_1^{SL}, t_2^{SL}, \ldots)$ denotes the set of slots which can belong to a sidelink resource pool and is defined in [TBD]. |
| The following steps are used: |
| [Step 1~6 is the same] |
| 7) The UE shall exclude any candidate single-slot resource $R_{x,y}$ from the set $S_A$ if it meets all the following conditions: |
|    a. the UE receives an SCI format 0-1 in slot $t_m^{SL}$ · and "Resource reservation period" field, if present, in the received SCI format 0-1 indicate the values $P_{rsvp\_RX}$, and "Time resource assignment" field in the received SCI format 0-1 indicate the values gap1 and/or gap 2, if present; |
|    b. alt1: the UE receives an associated SCI format 0-2 in slot $t_m^{SL}$ · and "Source ID" field is indicated to same target device as indicated by the L1 destination ID |
|    b. alt 2: the UE receives an associated SCI format 0-2 in slot $t_m^{SL}$ · and "Source ID" field is indicated to same target device belonging to a group with groupcast destination ID as indicated by the L1 destination ID or is belonging to broadcast destination ID as indicated by the L1 destination ID. |
|    c. $t_{m+q\times P'_{rsvp\_RX}}^{SL}$ for $q$=1, 2, ..., $Q$ is overlapped with |
| $R_{x,y+j\times P'_{rsvp\_TX}}$ for $j$=0, 1, ..., $C_{resel}$ - 1; and/or |
| $t_{m+gap1+q\times P'_{rsvp\_RX}}^{SL}$ for $q$=0, 1, 2, ..., $Q$ is overlapped with |
| $R_{x,y+j\times P'_{rsvp\_TX}}$ for $j$=0, 1, ..., $C_{resel}$ - 1; and/or |
| $t_{m+gap2+q\times P'_{rsvp\_RX}}^{SL}$ for $q$=0, 1, 2, ..., $Q$ is overlapped with |
| $R_{x,y+j\times P'_{rsvp\_TX}}$ for $j$=0, 1, ..., $C_{resel}$ - 1. |
| 8) If the number of candidate single-slot resources remaining in the set $S_A$ is smaller than $0.2 \cdot M_{total}$, then $Th$ $(p_i)$ is increased by 3 dB for each priority value $Th(p_i)$ and the procedure continues with step 4. |
| The UE shall report set $S_A$ to higher layers. |

**Concept** 2

One general concept of the invention is that a second device receives a signal from a first device with a first identity (via PC5-interface). The signal may indicate a set of resource(s) in a sidelink resource pool. The second device may be triggered by higher layer (of the second device) to perform sidelink transmission with a first number of consecutive sub-channel(s). The second device could select a first candidate resource with the first number of consecutive sub-channel(s). The first candidate resource may be at least overlapped with at least one of resource in the set of resource(s) in time domain. The starting sub-channel of the first candidate resource may be at least in the set of resource(s). The ending sub-channel of the first candidate resource can or cannot be in the set of resource(s). It may mean that the starting sub-channel of the first candidate resource is limited within the frequency region of the set of resource(s) in frequency domain. The ending sub-channel of the first candidate resource may not be limited within the frequency region of the set of resource(s) in frequency domain.

Alternatively, the ending sub-channel of the first candidate resource must be in the set of resource(s). If the ending sub-channel of a first candidate resource does not in the set of resource(s), the second device would exclude the candidate resource. Alternatively, when or if the first candidate resource is overlapped with a subset of the set of resource(s) in time domain, the first candidate resource may be limited within the frequency region of the subset of resource(s) in frequency domain. When or if the first candidate resource is overlapped with a subset of the set of resource(s) in time domain, the starting sub-channel and the ending sub-channel of the first candidate resource may be limited within the frequency region of the subset of resource(s) in frequency domain.

Alternatively, when or if the second device derives that frequency size of the set of resource(s) is less than the first number of sub-channel(s), the second device could select a second candidate resource with a second number of consecutive sub-channel(s). The second number of consecutive sub-channel(s) could be within the frequency size of the set of resource(s). The second number of consecutive sub-channel(s) could be less than or equal to the frequency size of the set of resource(s). The second number of consecutive sub-channel(s) could be 1 sub-channel.

The second device could transmit the sidelink transmission on the first candidate resource and indicates the length of the first candidate resource by a SCI (scheduling the sidelink transmission). The SCI could indicate one or more resource(s) for retransmission of the sidelink transmission. The SCI may be transmitted in a sub-channel of the first candidate resource. The sub-channel may be the starting sub-channel of the first candidate resource. The first device could receive at least the SCI in the sub-channel (when ending sub-channel of the first candidate resource is outside the set of resource(s)). The first device may not decode the sidelink transmission successfully. The first device could enlarge, shift, or switch the monitoring frequency region to receive retransmission based on indication of the SCI. In other words, the limitation, that starting sub-channel of the first candidate resource is limited within the frequency region of the set of resource(s) in frequency domain, may be to ensure that the first device can receive the $1^{st}$-stage SCI (e.g., SCI format 0-1) in the starting sub-channel. If the SCI indicates that ending sub-channel of the first candidate resource is outside the set of resource(s), the first device could enlarge, shift, or switch the monitoring frequency region to receive retransmission based on indication of the SCI. If the SCI indicates that the first candidate resource is not fully comprised within the set of resource(s), the first device could enlarge, shift, or switch the monitoring frequency region to receive retransmission based on indication of the SCI.

Preferably, if the ending sub-channel of the first candidate resource is outside the set of resource(s), the second device may generate or transmit $2^{nd}$-stage SCI (e.g., SCI format 0-2), associated with the sidelink transmission, within the frequency region of the set of resource(s) in frequency domain. In other words, when the first candidate resource for the sidelink transmission is outside the set of resource(s), the $1^{st}$-stage SCI and the $2^{nd}$-stage may be generated or transmitted within the frequency region of the set of resource(s) in frequency domain. Preferably, the sidelink transmission may not be (pre-)reserved by another previous SCI.

Alternatively, if the ending sub-channel of the first candidate resource is outside the set of resource(s), the second device may generate or transmit $2^{nd}$-stage SCI (e.g., SCI format 0-2), associated with the sidelink transmission, outside the frequency region of the set of resource(s) in frequency domain.

The source identity for the signal may be the first identity. Higher layer of the second device could derive a second identity as a destination for the sidelink transmission. The second device could select a candidate timing for the sidelink transmission based on the signal. The second device could derive whether to select a candidate resource or timing based on the signal via whether target device of the sidelink transmission comprises the first device. If or when target device of the sidelink transmission comprises the first device, the second device could select a candidate resource or timing based on the signal. The second device derives whether to select a candidate resource or timing based on the signal via whether the second identity is the same as the first identity or the second identity comprises the first device as a target device of the sidelink transmission. The second device could be (pre-)configured whether to exclude a candidate resource or timing based on target device(s)'s (previous) signal(s).

When or if the second device determines to perform resource selection or perform resource exclusion for a candidate resource based on the signal, the second device could check whether the starting sub-channel of the candidate resource and/or the starting sub-channel of preferable the candidate resource with one or more reserved periods is overlapped with the set of resources (in time domain) or not. If the starting sub-channel of the candidate resource and/or the starting sub-channel of preferable the candidate resource with one or more reserved periods is overlapped with the set of resources (in time domain), the second device may not exclude the candidate resource. If the starting sub-channel of the candidate resource and/or the starting sub-channel of preferable the candidate resource with one or more reserved periods is not overlapped with the set of resources (in time domain) nor within the set of resources, the second device may exclude the candidate resource.

Preferably, the starting sub-channel of a candidate resource may be the sub-channel where the second device transmits a sidelink control information (e.g., SCI format 0-1) scheduling for the sidelink transmission. The starting sub-channel of a candidate resource may be with lowest or highest sub-channel index among the sub-channel(s) in the candidate resource.

The first device could transmit a signal to a second device. The signal could indicate a set of resource(s) in the sidelink resource pool. The first device could monitor the set of resource(s).

The first device could receive a SCI in the set of resource(s). The SCI could be transmitted from the second device, and could indicate a first number of sub-channels for scheduling PSSCH, and frequency range of the scheduling PSSCH may exceed frequency range of the set of resource(s).

Preferably, the bit size of the "Frequency resource assignment field" in the SCI may be derived or determined based on the number of sub-channels in the sidelink resource pool or a (pre)configured number. When the first device monitors the set of resource(s), the first device could decode the SCI and/or the "Frequency resource assignment field" with bit size assumption, which is derived or determined based on the number of sub-channels in the sidelink resource pool or a (pre)configured number. Preferably, the first device may monitor a (narrow) BWP comprising the set of resource(s), wherein the (narrow) BWP may be comprised and smaller than the sidelink resource pool in the frequency domain. The first device may decode the SCI and/or the "Frequency resource assignment field" with bit size assumption, which is derived or determined based on the number of sub-channels in the sidelink resource pool or a (pre)configured number. The first device may not decode the SCI and/or the "Frequency resource assignment field" with bit size assumption, which is derived or determined based on the number of sub-channels in the set of resource(s) or the (narrow) BWP

The first device could (switch to) monitor the sidelink resource pool. Preferably, when the first device detects or receives the SCI of the sidelink transmission, which indicates that ending sub-channel of the first candidate resource is outside the set of resource(s), the first device could (switch to) monitor the full sidelink resource pool. Alternatively, when the first device detects or receives the SCI of the sidelink transmission, which indicates that ending sub-channel of the first candidate resource is not outside the set of resource(s), the first device may or may not (switch) to monitors the full sidelink resource pool. The first device may receive a retransmission with the first number of sub-channels from the second device.

Preferably, the set of resource(s) may be a portion of the sidelink resource pool in time domain and/or in frequency domain. The frequency range of the scheduling PSSCH may be the first number of sub-channel(s).

The signal may indicate the first device's intended received timing(s) and/or frequency(s) and/or resource(s), and/or the first device's monitoring timing(s)/resource(s) for performing sidelink transmission. Furthermore, the signal may indicate one or more monitoring time periods, and/or one or more monitoring frequency size for the one or more monitoring time periods, respectively. In addition, the signal may indicate a first time period (which is consecutive in the sidelink resource pool), and/or a second time period (which is consecutive in the sidelink resource pool). The signal may also indicate a first frequency size for monitoring sidelink during the first period, and/or a second frequency size for monitoring sidelink during the second period. The first time period could be from slot with index $t_{x1}$ to $t_{y1}$. The second time period could be from slot with index $t_{x2}$ to $t_{y2}$.

The set of resource(s) may comprise a plurality of resource(s) in the first frequency size and in the first time period, and/or a plurality of resource(s) in the second frequency size and in the second time period. The first frequency size could be from sub-channel k1 to sub-channel k1+l1 (which is less than whole SL BWP and/or the sidelink resource pool). The second frequency size could be from sub-channel k2 to sub-channel k2+l2 (which is less than whole SL BWP and/or the sidelink resource pool, or is equal to the whole SL BWP and/or the sidelink resource pool).

The first device may (only) monitor a portion of the sidelink resource pool during the first time periods from the slot with index tx to ty (if the first device does not receive other indication for switch frequency size). The signal could be a first stage SCI and/or an associated second stage SCI and/or PSSCH in a same slot/timing. The signal could be transmitted via one or more MAC CE and/or a RRC signaling.

The signal may indicate the set of timings/resource(s) by a reserved period and/or a time gap. The signal may also indicate a destination identity. The destination identity may not comprise the second device. In other words, the second device may not receive the scheduling PSSCH based on the signal. The destination identity may be a groupcast identity of a group not comprising the second device. Alternatively, the destination identity may comprise the second device. The destination identity may be the second identity. The destination identity may also be a groupcast identity of a group comprising the second device.

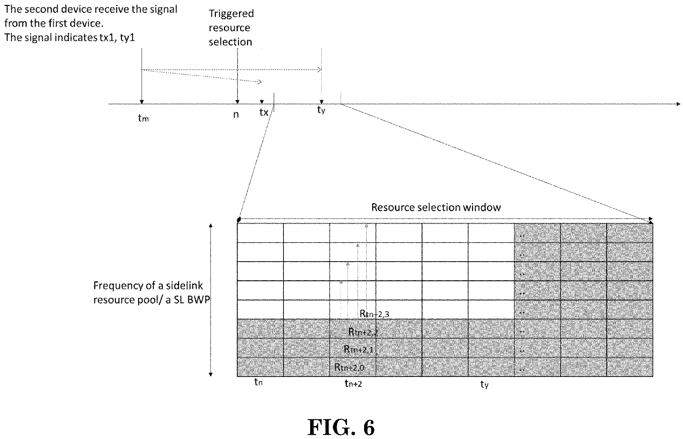

For example, as shown in FIG. 6, a second device receives a signal in a slot with index tm and the signal indicates tx to ty the first device only monitors 3 sub-channels. Frequency size of the set of resource is 3 sub-channels. The second device is triggered to select one or more candidate resources with consecutive five sub-channels for performing a sidelink transmission. In this example, the second device may select a candidate resource with 1 sub-channel for indicating the first device to enlarge to receive retransmission with 5 sub-channels. Alternatively, the second device would exclude candidate resource $R_{tn+2,3}$ (since starting sub-channel of the candidate resource does not within the set of resource(s)).

Text proposal

In resource allocation mode 2, the higher layer can request the UE to determine a subset of resources from which the higher layer will select resources for PSSCH/PSCCH transmission. To trigger this procedure, in slot *n,* the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of ms.
- optionally. L1 destination ID.

The resource reservation interval, $P_{rsvp\_TX}$, if provided, is converted from units of *ms* to units of logical slots, resulting in $P'_{rsvp\_TX}.$

Notation:

$(t_0^{SL}, t_1^{SL}, t_2^{SL}, \dots)$ denotes the set of slots which can belong to a sidelink resource pool and is defined in [TBD].

The following steps are used:

[Step 1~6 is the same]

7) The UE shall exclude any candidate single-slot resource $R_{x,y}$ from the set $S_A$ if it meets all the following conditions:

a. alt 1: the UE receives an SCI, and the SCI indicates a subset of resource(s). $t_{m+q \times P'_{rsvp\_RX}}^{SL}$ for $q$=1, 2, ..., $Q$.

a. alt 2: the higher layer indicates a subset of resource(s), $t_{m+q \times P'_{rsvp\_RX}}^{SL}$ for $q$=1, 2 , ..., $Q$.

b. alt 1: the UE receives an associated SCI format 0-2 in slot $t_m^{SL}$, and "Source ID" field is indicatedto same target device as indicated by the L1 destination ID

b. alt 2: the UE receives an associated SCI format 0-2 in slot $t_m^{SL}$, and "Source ID" field is indicatedto same target device belonging to a group with groupcast destination ID as indicated by the L1 destination ID or is belonging to broadcast destination ID as indicated by the L1 destination ID.

c. alt 1: any one of $R_{x,y+j \times P'_{rsvp\_TX}}$ for $j$=0, 1, ..., $C_{resel}$ - 1 with x does not overlap with the subset of resource(s).

c. alt 2: any one of $R_{x,y}$ with x does not overlap with the subset of resource(s).

8) If the number of candidate single-slot resources remaining in the set $S_A$ is smaller than $0.2 \cdot M_{total}$, then $Th(p_i)$ is increased by 3 dB for each priority value $Th(p_i)$ and the procedure continues with step 4.

The UE shall report set $S_A$ to higher layers.

## Concept 3

One general concept of the invention is that a second device receives a signal from a first device with a first identity (via PC5-interface). The signal may indicate a (first) set of resource(s) in a (sidelink) resource pool. The second device may be triggered by higher layer (of the second device) to perform sidelink transmission with a first number of consecutive sub-channel(s). The second device could perform resource selection on whole or portion of the set of resource(s). The second device could derive a selection window based on triggered time and/or delay requirement. Resource(s) in the selection window may only comprise portion or whole the set of resource(s). The second device could select a first number of resource(s) in the selection window based on sensing result (e.g., the first number of resources is x% resources in the set of resource(s) in the selection window). The second device could release RSRP threshold for selecting the first number of resource(s). The second device could end the iteration when an iteration number is achieved or the first number of resources is selected. The second device could select a first candidate resource with the first number of consecutive sub-channel(s) from the first number of resource(s). The set of resource(s) could be portion of the sidelink resource pool.

Preferably, x% may be a first amount threshold. The second device could be (pre-)configured with the first amount threshold.

If the second device could not select enough resources in the selection window (e.g., cannot select the first number of resource(s), or cannot select x% resources in the set of resource(s) in the selection window), the second device may switch to perform resource selection on a second set of resource(s) or the (whole) sidelink resource pool. Preferably, the second set of resource(s) may comprise the first set of resource(s). The second set of resource(s) could be resource(s) additional to the first set of resource(s). The signal could indicate the (first) set of resource(s) and the second set of resource(s).

Preferably, the second set of resource(s) may be secondary resource for the second device to use. The second set of resource(s) may be associated to higher RSRP than or equal to the first set of resource(s) (which may result in higher interference when the second device selects to transmit to the first device). Furthermore, the second set of resource(s) may be associated to timing or slot where the first device may (seldom) perform sidelink transmission. In addition, the second set of resource(s) may be associated to timing or slot where the associated PSFCH timing or PSFCH resource the first device may need to perform monitoring rather than performing transmitting feedback. In other words, the second device could perform resource selection on whole or portion of the set of resource(s) at first. When or once the second device could not select enough resources from the whole or portion of the set of resource(s), the second device could switch to perform resource selection on the (whole) sidelink resource pool.

Preferably, the second device may determine, whether to select a candidate resource based on the signal from the first device, based on CBR or CR or channel congested condition in the resource pool. If the channel condition of the resource pool is congested (e.g., larger than a congestion threshold), the second device may perform resource selection on the resource pool rather than (only) on the set of resource(s) from the signal. The second device could derive CBR or CR or channel congested condition for each priority (e.g., PPPP, or priority indicated in a SCI). If higher layer of the second device indicates a priority of a sidelink transmission, the second device could determine, whether to perform resource selection based on the signal, based on CBR or CR or channel condition associated to the priority.

Preferably, the second device could trigger or request the first device to change or update the set of resource(s) when or once the second device detects problems on the set of resource(s). The problems could be the set of resource(s) is not enough. The problems could also be the first amount threshold cannot be achieved. Furthermore, the problems could be the second device detects CBR or CR or channel condition of the set of resource(s) is larger congestion threshold. In addition, the problems could be no resource(s) or few resource(s) with the first number of consecutive sub-channel(s) in the set of resource(s).

## Concept 4

One general concept of the invention is that a second device receives a signal from a first device with a first identity (via PC5-interface). The signal may indicate a set of resource(s) in a (sidelink) resource pool. The second device may be triggered by higher layer (of the second device) to perform sidelink transmission with a first number of consecutive sub-channel(s). The second device could perform resource selection on the resource pool. The second device could derive a selection window based on triggered time and/or delay requirement. The second device could select a first number of resource(s) in the selection window based on sensing result.

The first number of resources may be x% resources in the set of resources in the selection window, or y% resources in the selection window. Also, the first number of resources may belong to the set of resource(s) and may be x% resources in the selection window. The second device could release RSRP threshold for selecting the first number of resource(s). The second device could end the iteration when an iteration number is achieved or the first number of resources is selected based on x% resources in the set of resources in the selection window or y% resources in the selection window.

Preferably, x% may be a first amount threshold. y% may be a second amount threshold. The second device could be (pre-)configured with the first amount threshold and/or the second amount threshold.

Preferably, the value of x may be smaller than or equal to value of y. The value of x and the value of y may be between 0 to 100. The value of x and the value of y may be an integer.

Preferably, if value of x is 0, the second device may not perform resource selection based on the first amount threshold or the second device is disabled by the first device performing resource selection based on the first amount threshold. Preferably, the value of x may be 10, and the value of y may be 20.

The second device derives a first number of resources based on resources in the resource selection window and a second amount threshold, or the second device derives a first number of resources based on resources in the resource selection window and in the set of resources and a first amount threshold.

The first number of resources may be resources in the resource selection window with lower RSRP values (based on sensing result), or resources in both the resource selection window and the set of resources with lower RSRP values (based on sensing result). The first number of resources may comprise resources in the resource selection window are derived from the total amount of candidate resource(s) in the resource selection window times the second amount threshold. The first number of resources may also comprise resources in both the resource selection window and the set of resources are derived from the total amount of candidate resource(s) in the resource selection window and in the set of resources times the first amount threshold. In addition, the first number of resources may comprise resources in both the resource selection window and the set of resources are derived from the total amount of candidate resource(s) in the resource selection window times the first amount threshold.

If the second device cannot derive (enough) the first number of resources in a given RSRP threshold, the second device may release RSRP threshold or may increase RSRP threshold for deriving the first number of resources. The second device may end iteration or may stop releasing RSRP threshold or may stop increasing RSRP threshold, when one of the following criteria is met:

- the first number of resources comprising resources in the resource selection window is larger than or equal to the total amount of candidate resource(s) in the resource selection window times the second amount threshold;
- the first number of resources comprising resources in both the resource selection window and the set of resources is larger than or equal to the total amount of candidate resource(s) in the resource selection window and in the set of resources times the first amount threshold; and/or
- the first number of resources comprising resources in both the resource selection window and the set of resources is larger than or equal to the total amount of candidate resource(s) in the resource selection window and in the set of resources times the first amount threshold.

Preferably, the second device may determine whether to select a candidate resource based on the signal from the first device, based on CBR or CR or channel congested condition in the resource pool. If channel condition of the resource pool is congested (e.g., larger than a congestion threshold), the second device may perform resource selection on the resource pool rather than (only) on the set of resource(s) from the signal. The second device could derive CBR or CR or channel congested condition for each priority (e.g., PPPP, or priority indicated in a SCI). If higher layer of the second device indicates a priority of a sidelink transmission, the second device could determine, whether to perform resource selection based on the signal, based on CBR or CR or channel condition associated to the priority.

Preferably, the second device may determine whether to performs resource selection based on the first amount threshold and/or the second amount threshold, based on CBR or CR or channel congested condition in the resource pool. If channel condition of the resource pool is congested (e.g., larger than a congestion threshold), the second device may perform resource selection on the resource pool based on (only) the second threshold. The second device may perform resource selection on the resource pool, which ending condition is not derived from the first amount threshold. The second device could derive CBR or CR or channel congested condition for each priority (e.g., PPPP, or priority indicated in a SCI). If higher layer of the second device indicates a priority of a sidelink transmission, the second device could determine whether to perform resource selection based on the first amount threshold and the second amount threshold, based on CBR or CR or channel condition associated to the priority.

Text proposal 1

The following steps are used:
1) A candidate single-slot resource for transmission $R_{x,y}$ is defined as a set of $L_{subCH}$ contiguous sub-channels with sub-channel $x+j$ in slot $t_y^{SL}$ where $j = 0,..., L_{subCH} - 1$. The

UE shall assume that any set of $L_{subCH}$ contiguous sub-channels included in the corresponding resource pool within the time interval $[n + T_1, n + T_2]$ correspond to one candidate single-slot resource, where
- selection of $T_1$ is up to UE implementation under $0 \leq T_1 \leq T_{proc,1}$, where $T_{proc,1}$ is TBD;
- If $T_{2min}$ is shorter than the remaining packet delay budget (in slots) then $T_2$ is up to UE implementation subject to $T_{2min} \leq T_2 \leq$ remaining packet budget (in slots); otherwise $T_2$ is set to the remaining packet delay budget (in slots).
The total number of candidate single-slot resources is denoted by $M_{total1}$.
The total number of candidate single-slot resources based on a signal is denoted by $M_{total2}$, wherein a signal indicates a subset of resource(s) in the sidelink resource pool.

(continued)

2) The sensing window is defined by the range of slots $[n - T_0, n-T_{proc,0})$ where $T_0$ is defined above and $T_{proc,1}$ is TBD. The UE shall monitor slots which can belong to a sidelink resource pool within the sensing window except for those in which its own transmissions occur. The UE shall perform the behaviour in the following steps based on PSCCH decoded and RSRP measured in these slots.

3) The internal parameter $Th(p_i)$ is set to the corresponding value from higher layer parameter *SL-ThresRSRP_pi_pj* for $p_j$ equal to the given value of $prio_{TX}$ and each priority value $p_i$.

4) The set $S_A$ is initialized to the set of all the candidate single-slot resources, and the set $S_B$ is initialized to the set of all the candidate single-slot resources based on the signal.

5) The UE shall exclude any candidate single-slot resource $R_{x,y}$ from the set $S_A$ and exclude any candidate single-slot resource $R_{x,y}$ from the set $S_B$ if it meets all the following conditions:

- the UE has not monitored slot $t_m^{SL}$ in Step 2.

- for any periodicity value allowed by the higher layer parameter *reservationPeriodAllowed* and a hypothetical SCI format 0-1 received in slot $t_m^{SL}$ with "Resource reservation period" field set to that periodicity value and indicating all subchannels of the resource pool in this slot, condition c in step 6 would be met.

6) The UE shall exclude any candidate single-slot resource $R_{x,y}$ from the set $S_A$ and exclude any candidate single-slot resource $R_{x,y}$ from the set $S_B$ if it meets all the following conditions:

a. the UE receives an SCI format 0-1 in slot $t_m^{SL}$, and "Resource reservation period" field, if present, and "Priority" field in the received SCI format 0-1 indicate the values $P_{rsvp\_RX}$ and $prio_{RX}$, respectively according to Subclause [TBD] in [6, TS 38.213];

b. the RSRP measurement performed, according to subclause 8.4.2.1 for the received SCI format 0-1, is higher than $Th(prio_{RX})$;

c. the SCI format received in slot $t_m^{SL}$ or the same SCI format which, if and only if the "Resource reservation period" field is present in the received SCI format 0-1, is assumed to be received in slot(s) $t_{m+q \times P'_{rsvp\_RX}}^{SL}$ determines according to subclause [TBD] in [6, TS 38.213] the set of resource blocks and slots which overlaps with $R_{x,y+j \times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots, $Q = \left\lceil \dfrac{T_{scal}}{P_{rsvp\_RX}} \right\rceil$ if $P_{rsvp\_RX} < T_{scal}$ and $n' - m \leq P'_{rsvp\_RX}$, where $t_{n'}^{SL} = n$ if slot n belongs to the set $\left(t_0^{SL}, t_1^{SL}, \ldots, t_{T_{max}}^{SL}\right)$, otherwise slot $t_{n'}^{SL}$ is the first slot after slot n belonging to the set $\left(t_0^{SL}, t_1^{SL}, \ldots, t_{T_{max}}^{SL}\right)$; otherwise Q = 1. $T_{scal}$ is FFS.

7) If the number of candidate single-slot resources remaining in the set $S_A$ is smaller than $y\% \cdot M_{total1}$, or the number of candidate single-slot resources remaining in the set $S_B$ is smaller than $x\% \cdot M_{total2}$, then $Th(p_i)$ is increased by 3 dB for each priority value $Th(p_i)$ and the procedure continues with step 4.

The UE shall report set $S_A$ or set $S_B$ to higher layers.

Text proposal 2

A signal indicates a subset of resource(s) in the sidelink resource pool.
The following steps are used:
    [Step 1~6 is the same]7) If the number of candidate single-slot resources remaining in the

(continued)

| |
|---|
| set $S_A$ is smaller than y% · $M_{total}$, or the number of candidate single-slot resources remaining in the set $S_A$ and indicated by the signal is smaller than x% · $M_{total}$, then $Th(p_i)$ is increased by 3 dB for each priority value $\overline{Th(p_i)}$ and the procedure continues with step 4.<br>The UE shall report set $S_A$ to higher layers. |

## Concept 5

One general concept of the invention is that a first device transmits a message to a second device (via PC5 interface). The message may indicate a list, wherein each entry indicates one set of resource(s) in a same or different sidelink resource pool. Preferably, the first device could transmit a signal indicating one or more entry to the second device. The first device could transmit a second signal indicating one or more (separate or partially overlapped) entry to a third device.

Preferably, the first device could indicate a first offset (via the signal) to the second device. The second device could indicate a second offset (via the second signal) to the third device.

Preferably, the first offset may be used for the second device to automatically add the one or more entry to select more resource(s) from the first signal for performing resource selection. The second offset may be used for the third device to automatically add the one or more entry to select more resource(s) from the second signal for performing resource selection. The second device could be triggered by higher layer (of the second device) to perform sidelink transmission with a first number of consecutive sub-channel(s). The second device could perform resource selection on the resource pool. The second device could derive a selection window based on triggered time and/or delay requirement. The second device could select a first number of resource(s) in the selection window based on sensing result.

Preferably, the first device could sense or detect one or more sidelink transmissions in the resource pool. The first device, based on the (previous) sensing result, could determine the set of resource(s).

Preferably, the first device could determine the set of resource(s) based on geographic distance and/or received RSRP from the second device. One possible way could be that the first device determines the set for a range of geographic distance and/or received RSRP. For example, when distance between the second device and the first device is derived within 100~200m, the first device could determine a set for 100~200m. The first device could transmit the signal indicating the set of resource(s) for 100m~200m to the second device. For example, when RSRP received from UE-B is within 1dbm~5dbm, the first device could determine a set for 1dbm~5dbm.

One possible way could be that the first device determines the set of resource(s) based on roughly location of the second device (e.g., direction of North, South, East, West, or relative direction of Forward, Backward, Left, Right from the first device). For example, if the second device is located on the North of the first device, the first device could transmit the signal indicating the set of resources for the North to the second device.

## Concept 6

One general concept of the invention is that a first device transmit a signal to one or more device(s) (via PC5 interface). The one or more device(s) comprises a second device. The signal may indicate a list, wherein each entry indicates one (or more) set of resource(s). In other words, the list may comprise one or more entry, or the list may indicate one or more set of resource(s). Alternatively, the signal may indicate one or more set of resource(s). Each entry may be associated to any one or more combination of characteristics (for the indicated set of resource(s)). Each entry may comprise a header for distinguish of the one or more combination of characteristic(s). Based on the header, the second device may know which one or more combination of characteristics where the entry is associated to. One or more set of resource(s) may be associated or may correspond to one or more combination of characteristic(s). One characteristic could be any of carrier index, sidelink resource pool index, sidelink BWP index, geographic area (index), geographic distance (level), RSRP (level), an entry in the inter-carrier frequency list, group index for a group performing groupcast sidelink transmission, L1/L2 source index of the first device, one or more L1/L2 destination index of the one or more device(s), member ID of the one or more device(s) in a group for groupcast sidelink transmission, CBR range or value, or priority (value).

The second device could receive the signal. The second device could determine which entry in the list to use based on characteristics of the second device (and the first device). For example, the second device could perform sidelink transmission with the first device via a first carrier and a second carrier. The second device could select the entry associated to the first carrier and the entry associated to the second carrier. The second device could perform resource selection based on the determined entry. As another example, if the second device is in a group for groupcast sidelink transmission (e.g., platooning) and the second device is indicated by higher layer (of the second device) that a member ID among the group, the second device could determine the entry associated to the member ID among the group. The second device could perform resource selection based on the determined entry. The second device could perform resource selection on the one (or more) set of resource(s) indicated/associated with the determined entry. In this example, the first device could belong to the group. The first device could be a leader device of the group.

The signal could be transmitted via a broadcast sidelink transmission or a groupcast sidelink transmission or a unicast sidelink transmission.

## Concept 7

One concept of the invention is that a second device receives a signal from a first device (via PC5-interface). The first device may be with a first identity. The signal could schedule or indicate a set of resource(s) in a sidelink resource pool. The signal could also indicate the set of resource(s) to the second device. The signal could be transmitted via a groupcast sidelink transmission or a broadcast sidelink transmission. The second device could perform sidelink transmission on the set of resource(s).

A third device may receive the signal. The third device could exclude a candidate timing for the sidelink transmission, wherein the candidate timing is partially or fully overlapped with resource(s) in the set of resource(s) in time domain (regardless of RSRP and/or priority indicated by the signal). A group may comprise the first device, the second device, and the third device. The third device could determine whether performing sidelink monitoring/reception or sidelink transmission on a resource among the set of resource(s), based on whether a paired device or device(s) belonging to same group is scheduled by the signal. For example, assuming the second device is one paired device of the third device (e.g., a unicast link or connection between the second device and the third device), when the signal schedules the second device with the set of resource(s), the third device could exclude a candidate resource with overlapped timing to resource(s) in the set of resource(s). In a similar example, assuming the second device and the third device belong to a same group for performing sidelink transmission, when the signal schedules the second device with the set of resource(s), the third device could exclude a candidate resource with overlapped timing to resource(s) in the set of resource(s).

The third device could be (pre-)configured as to whether to exclude a candidate resource/timing based on target device(s)'s the signal(s) at least including the first device's (previous) one or more signal(s). The second device may receive one or more the signals from the first device, wherein each from the one or more the signals could indicate a set of resource(s). When the second device performs resource selection, the second device could determine, whether to exclude resource(s) or timing(s) indicated by the one or more the signals, based on the destination for the sidelink transmission.

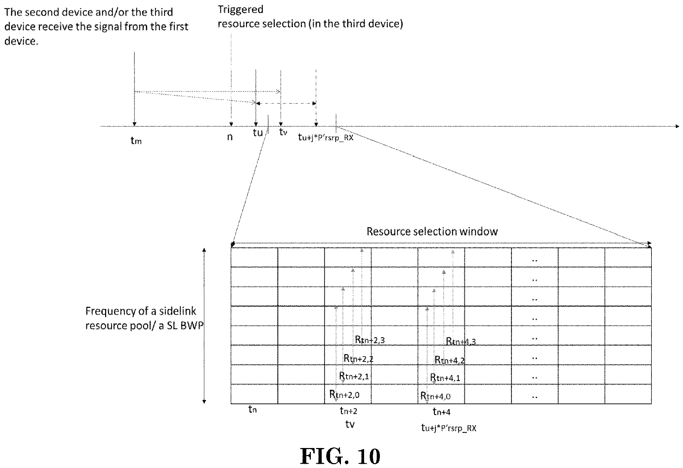

For example, as shown in FIG. 10, in slot with index tm, the second device and/or the third device may receive or detect a signal from the first device. The signal may indicate a set of resource(s) scheduled for the second device. In this example, the set of resource(s) may comprise resource(s) in slot with index tu and resource(s) in slot with index tv. In other words, the second device could perform sidelink transmission on these two timing or on the resource(s) scheduled by the signal. The third device may have an unicast link or connection to the second device. The third device and the second device could belong to a group. The group may be used for perfomring groupcast sidelink transmission. The third device may know slot with index tu, and slot with index tv may have (possible) sidelink transmission from the second device.

When the third device performs resource selection in a timing n, the third device could exclude resource(s) belonging to the set of resource(s) in a resource selection window associated to the timing n. The resource selection window may start from slot with index $t_n$ The third device may exclude candidate resource(s), $R_{tn+2,0}$, $R_{tn+2,1}$, $R_{tn+2,2}$, $R_{tn+2,3}$, wherein $t_{n+2}$ is $t_v$. The third device may exclude candidate resource(s) based on resource(s) in the set of resource(s) and one or more possible reserved period in the sidelink resource pool. In this example, slot with index $t_{u+j*P'rsrp\_RX}$ may imply possible reservation timing from slot with index tu.

Preferably, P'rsrp RX could denote possible reserved period in the sidelink resource pool. Index j could denote possible number based on a given reserved period. The third device could exclude candidate resource(s) $R_{tn+4},0$, $R_{tn+4},1$, $R_{tn}+_4,2$, and $R_{tn+4},3$, wherein tn+4 is or belongs to $t_{u+j*P'rsrp\_RX}$.

Text proposal 1

In resource allocation mode 2, the higher layer can request the UE to determine a subset of resources from which the higher layer will select resources for PSSCH/PSCCH transmission. To trigger this procedure, in slot *n,* the higher layer provides the following parameters for this PSSCH/PSCCH transmission:

(continued)

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of ms.
- optionally. L1 destination ID.

The resource reservation interval, $P_{rsvp\_TX}$, if provided, is converted from units of *ms* to units of logical slots, resulting in $P'_{rsvp\_TX}$.

Notation:

$$\left(t_0^{SL}, t_1^{SL}, t_2^{SL}, \dots\right)$$ denotes the set of slots which can belong to a sidelink resource pool and is defined in [TBD].

The following steps are used:

    [Step 1~6 is the same]

7) The UE shall exclude any candidate single-slot resource $R_{x,y}$ from the set $S_A$ if it meets all the following conditions:

    a. alt 1: the UE receives a signal indicating a subset of resource(s), $t_{m+q \times P'_{rsvp\_RX}}^{SL}$ for $q=1\ 2,..., Q$, in the sidelink resource pool, and the UE has not been scheduled by the signal;

    a. alt 2: the UE receives a signal indicating a subset of resource(s) in the sidelink resource pool, and the UE has not been scheduled by the signal;

    b. alt 1: any resource in the subset of resource(s) is overlapped with $R_{x,y+j \times P'_{rsvp\_TX}}$ for $j=0, 1, ..., C_{resel}$ - 1.

    b. alt 2: for any periodicity value allowed by the higher layer parameter reservationPeriodAllowed and a hypothetical SCI format 0-1 received in any resource in the subset of resource(s) with "Resource reservation period" field set to that periodicity value and indicating all subchannels of the resource pool in this slot, condition c in step 6 would be met.

    b. alt 3: any resource in the subset of resource(s), $t_{m+q \times P'_{rsvp\_RX}}^{SL}$ for $q= 1,2,... ,Q$ is overlapped with $R_{x,y+j \times P'_{rsvp\_TX}}$ for $j=0, 1, ..., C_{resel}$ - 1.

    c. (preferably alt 1) the signal indicates an identity which is the same as the L1 destination ID:

    c. (preferably alt 2) the signal indicates an identity, and the L1 destination ID is indicative a groupcast sidelink transmission including a device with the identity;

8) If the number of candidate single-slot resources remaining in the set $S_A$ is smaller than $0.2 \cdot M_{total}$, then $Th(p_i)$ is increased by 3 dB for each priority value $Th(p_i)$ and the procedure continues with step 4.

The UE shall report set $S_A$ to higher layers.

Besides the above Concepts 1-7 to improve reliability and/or latency, in current LTE and NR sidelink transmission, there is no mechanism to achieve such inter-UE coordination (e.g. transmit the signal from the first device to the second device). To achieve inter-UE scheduling or assignment or coordination, some concepts, mechanisms, and methods are discussed below.

Method *a*

A first device (e.g. UE A) transmits or delivers a (scheduling) information to a second device (e.g. UE B). Preferably, the (scheduling) information may be the set of resource(s) in the sidelink resource pool in any of Concepts 1-4, or 7. Alternatively, the (scheduling) information may be the list, wherein each entry indicates the one (or more) set of resource(s) in Concept 6. Alternatively, the (scheduling) information may be the list, wherein each entry indicates the one set of resource(s) in the same or different sidelink resource pool in Concept 5. Alternatively, the (scheduling) information assigns, schedules, indicates, or comprises one or more sidelink resource(s). In response to the second device receives the (scheduling) information, the second device could perform one or more sidelink data transmission(s), to the first device, on the one or more sidelink resource(s). Preferably, the one or more sidelink data transmission(s) may comprise or include sidelink data packet for at least the first device.

Preferably, the first device and the second device may have sidelink connection with or between each other. The first device may have a unicast link or connection with the second device. The first device may have a groupcast link or connection with the second device. The first device and the second device are belonging to or within a sidelink group. In other word, member devices in the sidelink group may comprise at least the first device and the second device.

There are some alternatives for the first device to transmit or deliver the (scheduling) information to the second device:

*Alternative 1:*

Preferably, the (scheduling) information may be (considered as) a specific sidelink control information. The (scheduling) information may be transmitted or delivered based on single-stage SCI scheme.

Preferably, the (full) (scheduling) information may be transmitted or delivered (only) via a specific sidelink control transmission. The signal in any of above concepts 1-7 may be, mean, or represent the specific sidelink control transmission. The specific sidelink control transmission may be a specific PSCCH. The (full) (scheduling) information may be transmitted or delivered via PSCCH structure.

Preferably, the specific sidelink control transmission may be performed in symbols for general sidelink control transmission. The general sidelink control transmission may comprise a general 1st stage SCI. Preferably, a general 1st stage SCI is SCI format 0-1. The specific sidelink control transmission may also be performed in specific symbols and/or in specific TTIs. In other words, the (scheduling) information may not be transmitted or delivered based on two-stage SCI scheme. The content of the (scheduling) information may not divide into 1st stage SCI and 2nd stage SCI.

Preferably, for the specific sidelink control transmission, there may be no associated sidelink data transmission from the first device. The (scheduling) information from the first device may not schedule or assign sidelink data transmission(s) from the first device. The specific sidelink control transmission may be a standalone PSCCH. A standalone PSCCH could mean or imply that there is no scheduled PSSCH for sidelink data in a same TTI. The sidelink resource for transmitting the specific sidelink control transmission may be restricted within or as single sub-channel in frequency domain. Preferably, the specific sidelink control transmission may be performed in specific frequency resource(s) or specific (single) sub-channel(s).

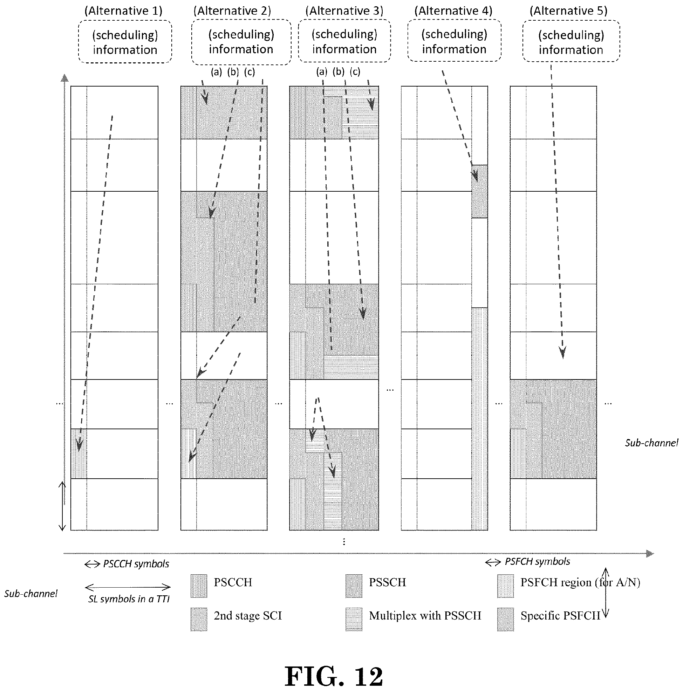

FIG. 12 illustrated an example of Alternative 1. The (full) (scheduling) information may be transmitted or delivered (only) via the specific sidelink control transmission, wherein the specific sidelink control transmission is transmitted, delivered, or performed in the PSCCH resource. Preferably, the content or fields of the specific sidelink control information or the (scheduling) information may be different from content or fields of general 1st stage SCI. Payload size or bit-size of the specific sidelink control information or the (scheduling) information may be different from payload size/bit-size of general 1st stage SCI. Alternatively, payload size or bit-size of the specific sidelink control information or the (scheduling) information may be the same with payload size/bit-size of general 1st stage SCI.

When or if the bit-size of the specific sidelink control information or the (scheduling) information is less than bit-size of general 1st stage SCI, padding bits or reserve bits may be appended to the specific sidelink control information or the (scheduling) information for aligning to the bit-size of general 1st stage SCI. Bit-size of general 1st stage SCI includes sidelink control information bits, CRC bits, and/or ((pre)configured) reserved bits.

Preferably, the specific sidelink control transmission may be decodable for the second device. The specific sidelink control transmission may not be decodable for other devices, except the second device. Alternatively, the specific sidelink control transmission may be decodable for (member devices in) the sidelink group.

Preferably, the specific sidelink control transmission may not be decodable for other devices, except (the member devices in) the sidelink group. When the first device generates the specific sidelink control transmission, the (scheduling) information may be scrambled with a specific scrambling sequence. Alternatively, CRC parity bits of the (scheduling) information may be scrambled with a specific scrambling sequence. The specific scrambling sequence may be generated via a specific parameter or identity, which belongs to the sidelink connection between the first device and the second device. The specific scrambling sequence may also be generated via a specific parameter or identity of the first device. Furthermore, the specific scrambling sequence may be generated via a specific parameter or identity of the second device.

Preferably, the specific scrambling sequence may be known by (the member devices in) the sidelink group. The (member devices in the) sidelink group may attempt to utilize the specific scrambling sequence to descramble and (blind) decode sidelink control transmission(s). The specific scrambling sequence may be generated via a specific parameter or identity, which belongs to (the sidelink connection of) the sidelink group.

Preferably, the specific sidelink control transmission may be decodable for devices supporting, enabling, configured inter-device coordination, or scheduling. The specific sidelink control transmission may not be decodable for other devices not supporting, enabling, configured inter-device coordination, or scheduling. When the first device generates the specific sidelink control transmission, the (scheduling) information may be scrambled with a specific scrambling sequence. Alternatively, CRC parity bits of the (scheduling) information may be scrambled with a specific scrambling sequence.

Preferably, the specific scrambling sequence may be known by the devices supporting, enabling, configured inter-device coordination, or scheduling. The devices supporting, enabling, configured inter-device coordination, or scheduling may attempt to utilize the specific scrambling sequence to descramble and (blind) decode sidelink control transmission(s). The specific scrambling sequence may be generated via a specific parameter or identity, which is associated with the functionality of inter-device coordination or scheduling.

*Alternative 2*

Preferably, the (scheduling) information may be (considered as) a specific sidelink control information. The (scheduling) information may be transmitted or delivered based on two-stage SCI scheme.

Preferably, the content of the (scheduling) information may divide into specific 1st stage SCI and specific 2nd stage SCI. The (scheduling) information may be transmitted or delivered via specific 1st stage SCI carried on specific sidelink control transmission and specific 2nd stage SCI carried on specific sidelink transmission. The signal in any of above Concepts 1-7 may be, mean, or represent the specific sidelink control transmission and/or the specific sidelink transmission.

Preferably, the specific sidelink control transmission may be a specific PSCCH. In particular, the specific sidelink transmission may be a specific PSSCH for carrying the specific 2nd stage SCI. The specific sidelink transmission for carrying the specific 2nd stage SCI may be generated or transmitted via PSSCH structure. The specific 2nd stage SCI or the specific sidelink transmission may be indicated via the specific 1st stage SCI. The specific 2nd stage SCI or the specific sidelink transmission may also be indicated implicitly via existence of the specific 1st stage SCI.

Preferably, the specific 1st stage SCI and the (indicated/associated) specific 2nd stage SCI may be transmitted or delivered in the same TTI. The specific 1st stage SCI may be transmitted or delivered via PSCCH structure. The (indicated or associated) specific 2nd stage SCI may be transmitted or delivered via PSSCH structure.

Preferably, for the specific sidelink control transmission and/or the specific sidelink transmission, there may be associated sidelink data transmission from the first device. Alternatively, for the specific sidelink control transmission and/or the specific sidelink transmission, there may be no associated sidelink data transmission from the first device. The (scheduling) information from the first device may not schedule or assign sidelink data transmission(s) from the first device. The specific sidelink control transmission may be a standalone PSCCH. A standalone PSCCH could mean or imply that there is no scheduled PSSCH for sidelink data in a same TTI. A standalone PSCCH could also mean or imply that, in a same TTI, the scheduled PSSCH may comprise only sidelink control information (e.g., (specific or general) 2nd stage SCI).

Preferably, the sidelink resource for transmitting the specific sidelink control transmission may be restricted within or as single sub-channel in frequency domain. The sidelink resource for transmitting the specific sidelink transmission may be restricted within or as (the same) single sub-channel in frequency domain.

Preferably, the content of the (scheduling) information may be (fully) comprised or included in specific 2nd stage SCI. Preferably, the content of the (scheduling) information may not be comprised or included in general 1st stage SCI. There may be no specific 1st stage SCI for the (scheduling) information.

Preferably, the specific 2nd stage SCI may be indicated or scheduled by general 1st stage SCI. The (scheduling) information may be transmitted or delivered via specific 2nd stage SCI carried on specific sidelink transmission. The signal in any of above Concepts 1-7 may be, mean, or represent the specific sidelink transmission. The specific sidelink transmission may be a specific PSSCH for carrying the specific 2nd stage SCI. The specific sidelink transmission for carrying the specific 2nd stage SCI may be generated or transmitted via PSSCH structure. The specific 2nd stage SCI or the specific sidelink transmission may be indicated via general 1st stage SCI.

Preferably, at least one field or one bit or code-point(s) in general 1st stage SCI may be utilized to indicate associated 2nd stage SCI is specific 2nd stage SCI or general 2nd stage SCI. The at least one field or one bit or code-point(s) in general 1st stage SCI could be an indicator for indicating 2nd stage SCI format. A 2nd stage SCI format could be a general 2nd stage SCI with groupcast type-1 feedback scheme (e.g., NACK based feedback transmission), a general 2nd stage SCI with groupcast type-2 feedback scheme (e.g., each device needs to transmit ACK or NACK as feedback), a general 2nd stage SCI with unicast, or a specific 2nd stage SCI (e.g., a (scheduling) information to the second device). The one field or the one bit or the code-point(s) may be reserved bit or code-point(s) in general 1st stage SCI. The general 1st stage SCI and the indicated or associated specific 2nd stage SCI could be transmitted or delivered in the same TTI

Preferably, other device(s) consider the one field or the one bit or the code-point(s) may be reserved. Other device(s) may not consider the one field or the one bit or the code-point(s) as valid. Other device(s) may not take into account the one field or the one bit or the code-point(s). Other device(s) may ignore the one field or the one bit or the code-point(s). Preferably, the other device(s) may be devices not supporting inter-device coordination or scheduling. Alternatively, the other device(s) may be devices supporting inter-device coordination or scheduling, and/or the other device(s) may derive whether to be scheduled by the specific 2nd stage SCI, based on L1 source ID and/or L1 destination ID. The second device may derive whether to be scheduled by the specific 2nd stage SCI, based on L1 source ID and/or L1 destination ID.

Preferably, for general 1st stage SCI and/or the specific 2nd stage SCI, there may be no associated sidelink data transmission from the first device. The general 1st stage SCI and/or the specific 2nd stage SCI from the first device may not schedule or assign sidelink data transmission(s) from the first device. The general 1st stage SCI may be transmitted or delivered via a standalone PSCCH. The sidelink resource for transmitting the general 1st stage SCI may be restricted within or as single sub-channel in frequency domain. The sidelink resource for transmitting the specific sidelink transmission may be restricted within or as (the same) single sub-channel in frequency domain. The specific sidelink transmission may comprise the specific 2nd stage SCI. The specific sidelink transmission may be transmitted or generated via PSSCH structure.

Alternatively, for general 1st stage SCI and/or the specific 2nd stage SCI, there may be associated sidelink data transmission(s) from the first device. The general 1st stage SCI and/or the specific 2nd stage SCI from the first device may schedule or assign sidelink data transmission(s) from the first device. At least one sidelink data transmission associated with the general 1st stage SCI and/or the specific 2nd stage SCI may be performed in the same TTI as the general 1st stage SCI and/or the specific 2nd stage SCI. The at least one sidelink data transmission associated with the general 1st stage SCI may comprise the specific 2nd stage SCI in the same TTI as the general 1st stage SCI.

FIG. 12 shows examples of Alternative 2. Alternative 2(c) shows that the (scheduling) information may be transmitted or delivered via specific 1st stage SCI carried on specific PSCCH and specific 2nd stage SCI carried on specific sidelink transmission. Alternative 2(b) shows that the (full) (scheduling) information may be transmitted or delivered via specific 2nd stage SCI carried on specific sidelink transmission. For PSCCH and/or the specific 2nd stage SCI, there may be associated PSSCH from the first device. Alternative 2(a) shows that the (full) (scheduling) information may be transmitted or delivered via specific 2nd stage SCI carried on specific sidelink transmission. For PSCCH and/or the specific 2nd stage SCI, there may be no associated PSSCH from the first device. The specific 2nd stage SCI may occupy remaining resources after putting PSCCH and/or DMRS.

Preferably, the content or fields of the specific 2nd stage SCI may be different from content or fields of general 2nd stage SCI. The bit-size of the specific 2nd stage SCI may be different from bit-size of general 2nd stage SCI.

*Alternative 3:*

Preferably, the (scheduling) information may be (considered as) a specific sidelink control information. The (scheduling) information may be transmitted or delivered via multiplexing with sidelink data transmission. The signal in any of above Concepts 1-7 may be transmitted or delivered via multiplexing with sidelink data transmission. Preferably, the (scheduling) information may be transmitted or delivered in some resource elements scheduled for the sidelink data transmission. The specific sidelink control information may be (considered as) 3rd stage SCI, which is different from general 1st stage SCI and general 2nd stage SCI.

Preferably, the sidelink data transmission may be or may mean PSSCH. The sidelink data transmission may be or may mean PSSCH carrying sidelink data packet. Alternatively, the sidelink data transmission may not carry, deliver, comprise, or include sidelink data packet. The sidelink data transmission may be scheduled via general 1st stage SCI and general 2nd stage SCI. The general 1st stage SCI may indicate whether there is (scheduling) information multiplexed with the scheduled sidelink data transmission. The general 2nd stage SCI may indicate whether there is (scheduling) information multiplexed with the scheduled sidelink data transmission. The (scheduling) information may not be comprised or included in the general 1st stage SCI and the general 2nd stage SCI.

FIG. 12 shows some examples of Alternative 3. Alternatives 3(a) and 3(b) show that the (scheduling) information may be transmitted delivered via multiplexing with PSSCH. PSSCH may carry sidelink data packet. Alternatives 3(a) and 3(b) may be different multiplexing approaches. In Alternative 3(a), the (scheduling) information may be multiplexed first in frequency domain and then in time domain. In Alternative 3(b), the (scheduling) information may be multiplexed first in time domain and then in frequency domain. Alternative 3(c) shows that the (scheduling) information may be transmitted or delivered via multiplexing with PSSCH, wherein there is no sidelink data packet in the PSSCH.

Preferably, the (scheduling) information may occupy all PSSCH resources (after putting 2nd stage SCI). The (scheduling) information (and 2nd stage SCI) may be associates with (same) beta offset value indicated by general 1st stage SCI. The beta offset value may be used to indicate a (resource amount) ratio between 2nd stage SCI and sidelink data packet, and/or a (resource amount) ratio between the (scheduling) information and sidelink data packet. The (scheduling) information may be associated with a beta offset value determined by indication from general 1st stage SCI and a specific offset or a specific table. Preferably, the specific offset/the specific table is associated to the second device specific information. Preferably, the indication from general 1st stage SCI could indicate (resource amount) ratio between

2nd stage SCI and sidelink data packet. Preferably, based on the specific offset/the specific table and/or the indication from general 1st stage SCI, (only) the second device could derive the resource(s) for receiving/decoding the (scheduling) information.

*Alternative 4:*

Preferably, the (scheduling) information may be (considered as) a specific sidelink control information. The (scheduling) information may be transmitted or delivered via specific sidelink (feedback) transmission. The signal in any of above Concepts 1-7 may be, mean, or represent the specific sidelink (feedback) transmission.

Preferably, the specific sidelink (feedback) transmission may be a specific PSFCH. The specific sidelink (feedback) transmission may be performed in symbols for general sidelink feedback transmission. The specific sidelink (feedback) transmission may be performed in specific symbols and/or in specific TTIs. The general sidelink feedback transmission may be or mean PSFCH. The specific sidelink (feedback) transmission may be performed in specific frequency resource(s) outside a set of resource blocks for general sidelink feedback transmission(s). The specific sidelink (feedback) transmission may not comprise SL HARQ-ACK feedback. The format or structure of the specific sidelink (feedback) transmission may be different from the format or structure of the general sidelink feedback transmission. The specific sidelink (feedback) transmission may be channel-based structure. The specific sidelink (feedback) transmission may not be sequence-based structure.

FIG. 12 shows an example of Alternative 4. The (scheduling) information may be transmitted or delivered via the specific sidelink (feedback) transmission. The specific sidelink (feedback) transmission may be transmitted or performed in the specific PSFCH resource.

Preferably, (a set of) the specific symbols and/or the specific TTIs may be (pre)configured for the sidelink connection between the first device and the second device. Furthermore, (a set of) the specific symbols and/or the specific TTIs may be (pre)configured for (the sidelink connection of) the sidelink group. (The set of) the specific symbols and/or the specific TTIs may be associated with the functionality of inter-device coordination or scheduling. (The set of) the specific symbols and/or the specific TTIs may be specified, or (pre-)configured per sidelink resource pool, or (pre-)configured per sidelink carrier/cell, or (pre-)configured per sidelink connection. (The set of) the specific symbols and/or the specific TTIs may be specified, or (pre-)configured with a periodicity.

Preferably, the time occasions of (the set of) the specific symbols and/or the specific TTIs may be derived or determined based on the periodicity. If or when the set of the specific symbols and/or the specific TTIs is (pre-)configured, the first device may perform the specific sidelink (feedback) transmission in one of time occasions of the set of the specific symbols and/or the specific TTIs. The second device may perform or attempt to (blind) decode or detect the specific sidelink (feedback) transmission(s) in the time occasions of the set of the specific symbols and/or the specific TTIs.

Preferably, (a set of) the specific frequency resource(s) may be (pre)configured for the sidelink connection between the first device and the second device. Furthermore, (a set of) the specific frequency resource(s) may be (pre)configured for (the sidelink connection of) the sidelink group. (The set of) the specific frequency resource(s) may be associated with the functionality of inter-device coordination or scheduling. (The set of) the specific frequency resource(s) may be specified, or (pre-)configured per sidelink resource pool, or (pre-)configured per sidelink carrier or cell, or (pre-)configured per sidelink connection.

Preferably, if or when the set of specific frequency resource(s) is (pre-)configured, the first device may perform the specific sidelink (feedback) transmission in one of the set of specific frequency resource(s). If or when the set of specific frequency resource(s) is (pre-)configured, the first device may perform the specific sidelink (feedback) transmission in one of the set of specific frequency resource(s). The second device may perform or attempt to (blind) decode or detect the specific sidelink (feedback) transmission(s) in the set of the specific frequency resource(s).

Preferably, the specific sidelink (feedback) transmission may be decodable for the second device. The specific sidelink (feedback) transmission may not be decodable for other devices, except the second device. The specific sidelink (feedback) transmission may be decodable for (member devices in) the sidelink group. The specific sidelink (feedback) transmission may not be decodable for other devices, except (the member devices in) the sidelink group.

Preferably, when the first device generates the specific sidelink (feedback) transmission, the (scheduling) information may be scrambled with a specific scrambling sequence. Alternatively, CRC parity bits of the (scheduling) information may be scrambled with a specific scrambling sequence. The specific scrambling sequence may be known by the first device and the second device. The second device may attempt to utilize the specific scrambling sequence to descramble and (blind) decode specific sidelink (feedback) transmission(s).

Preferably, the specific scrambling sequence may be generated via a specific parameter or identity, which belongs to the sidelink connection between the first device and the second device. The specific scrambling sequence may be generated via a specific parameter or identity of the first device. The specific scrambling sequence may be generated via a specific parameter or identity of the second device. The specific scrambling sequence may be known by (the member devices in) the sidelink group. The (member devices in the) sidelink group may attempt to utilize the specific scrambling sequence to descramble and (blind) decode specific sidelink (feedback) transmission(s). The specific scrambling sequence may be generated via a specific parameter or identity, which belongs to (the sidelink connection of) the sidelink group.

Preferably, the specific sidelink (feedback) transmission may be decodable for devices supporting, enabling, configured inter-device coordination, or scheduling. The specific sidelink (feedback) transmission may not be decodable for other devices not supporting, enabling, configured inter-device coordination, or scheduling. When the first device generates the specific sidelink (feedback) transmission, the (scheduling) information may be scrambled with a specific scrambling sequence. Alternatively, CRC parity bits of the (scheduling) information may be scrambled with a specific scrambling sequence. The specific scrambling sequence may be known by the devices supporting, enabling, configured inter-device coordination, or scheduling. The devices supporting, enabling, configured inter-device coordination, or scheduling may attempt to utilize the specific scrambling sequence to descramble and (blind) decode specific sidelink (feedback) transmission(s). The specific scrambling sequence may be generated via a specific parameter or identity, which is associated with the functionality of inter-device coordination or scheduling.

*Alternative 5:*

Preferably, the (scheduling) information may be transmitted or delivered via higher layer signalling. The signal in any of above Concepts 1-7 may be, mean, or represent the higher layer signalling. The higher layer signalling may be MAC CE. The higher layer signalling may also be RRC configuration or RRC message. The higher layer signalling may be transmitted or delivered via sidelink data transmission. The higher layer signalling may be comprised or included in a sidelink data packet transmitted or delivered via sidelink data transmission. The sidelink data transmission may be PSSCH. The sidelink data transmission may be scheduled via general 1st stage SCI and general 2nd stage SCI.

FIG. 12 shows an example of Alternative 5. The (scheduling) information may be transmitted or delivered via PSSCH. The PSSCH may comprise or include sidelink data packet, which comprises or includes the (scheduling) information.

Preferably, when or if the second device receives the (scheduling) information, the second device may transmit or deliver a feedback to the first device. The feedback may be utilized to inform the first device whether the second device receives the (scheduling) information successfully. When the second device receives the (scheduling) information successfully, the second device may transmit or deliver a HARQ-ACK feedback as ACK to the first device. When the second device does not receive the (scheduling) information successfully, the second device may transmit or deliver a HARQ-ACK feedback as NACK to the first device. When the second device does not receive or detect the (scheduling) information, the second device may not transmit or deliver HARQ-ACK feedback to the first device. In aspect of first device, it may mean DTX. The second device may perform a (general) sidelink feedback transmission on a sidelink feedback resource for transmitting or delivering the feedback. The sidelink feedback transmission may be PSFCH.

Preferably, when the first device transmits the (scheduling) information to the second device, the first device may detect the associated feedback from the second device. In response to detection of the associated feedback (e.g. detecting ACK or existence of the feedback), the first device may know the second device received the (scheduling) information successfully and expect to receive one or more sidelink data transmission(s) on the one or more sidelink resource(s) assigned, scheduled, or indicated by the (scheduling) information. In response to detection of the associated feedback (e.g. detecting NACK or DTX, or not detecting the feedback), the first device may know the second device did not receive the (scheduling) information successfully and may retransmit the (scheduling) information to the second device.

For Alternative 1 or 2, the second device may derive a sidelink feedback resource based on the sidelink control resource of the received specific 1st stage SCI or the received specific sidelink control transmission. For Alternative 2 or 3, the second device may derive a sidelink feedback resource based on the sidelink control resource of the received general 1st stage SCI or the received sidelink control transmission. For Alternative 4, the second device may derive a sidelink feedback resource based on the sidelink (feedback) resource of the received specific sidelink (feedback) transmission. Preferably, the derivation may be based on a specified or (pre-)configured association between the sidelink feedback resource and the sidelink control resource or sidelink (feedback) resource. The association may comprise time domain association and/or frequency domain association. For Alternative 5, since the (scheduling) information is comprised or included in sidelink data packet, when the first device detects HARQ-ACK as ACK for the sidelink data packet or the sidelink data transmission, the first device can know the second device received the (scheduling) information. When the first device detects HARQ-ACK as NACK or DTX for the sidelink data packet or the sidelink data transmission, the first device may know the second device does not receive the (scheduling) information.

Preferably, the first device may perform (blind) retransmission(s) of the (scheduling) information before the first device detects or receives the feedback. It may be for enhancing reliability and/or reducing latency for the (scheduling) information delivery.

Preferably, the (scheduling) information may indicate the second device whether to transmit the feedback or not in response to reception of the (scheduling) information. If not, when the second device receives the (scheduling) information, the second device may not transmit or deliver associated feedback to the first device.

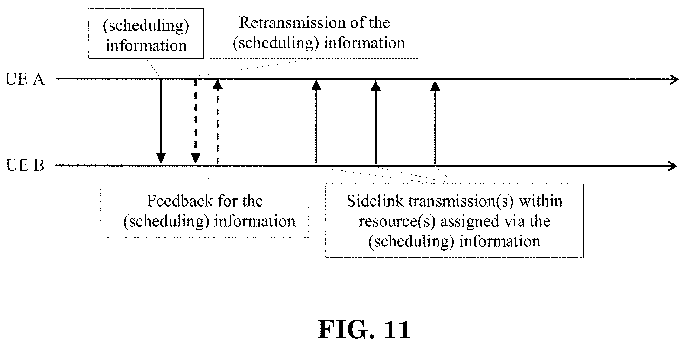

As illustrated in the example shown in FIG. 11, UE A may transmit (scheduling) information to UE B. Upon reception or detection of the (scheduling) information, the UE B may or may not transmit feedback associated with reception or delivery of the (scheduling) information. UE A may or may not perform retransmission of the (scheduling) information before receiving or detecting the feedback from UE B. When UE B receives the (scheduling) information, UE B may perform one or more sidelink transmission(s), e.g. PSSCH(s), on the one or more sidelink resource(s) assigned, scheduled, or indicated by the (scheduling) information.

Preferably, the (scheduling) information may comprise field of a (first) destination index and/or a source index. The destination index may indicate partial or full of the second device identity. The source index may indicate partial or full of the first device identity. As an example, the second device identity may be 24 bits, and the destination index may indicate 8 bits or 16 bits or 24 bits of the 24-bit second device identity. As another example, the first device identity may be 24 bits, and the source index may indicate 8 bits, 16 bits, or 24 bits of the 24-bit first device identity. The (first) destination index could indicate a groupcast destination index of a group. The group could be used for performing sidelink transmission. The group may comprise at least the first device and the second device. The (first) destination index could indicate a group for devices supporting inter-device coordination or scheduling.

Preferably, the (scheduling) information may comprise field of priority. It may indicate a specified, (pre-)configured priority value for the (scheduling) information. It may also indicate a specific value. In addition, it may indicate a highest priority value among all configured or supported logical channels for the sidelink connection between the first device and the second device.

Preferably, the (scheduling) information may comprise field of a second destination index. The second destination index could indicate a device (e.g., the second device) the (scheduling) information schedules. The second destination index could be a device's L1 destination ID or a member ID of the device in the group. The size of the second destination index field could be associated to number of devices in the group.

Preferably, the group indicated by the first destination index must or shall comprise a device indicated by the second destination index. For instance, a group for performing sidelink transmission comprises the second device and the first device and a third device. The first device could transmit the (scheduling) information with the first destination index field indicative of the group and the second destination index field indicative of the second device. The second device could, based on the (scheduling) information, perform sidelink transmission. The third device may not perform sidelink transmission on the resource(s) scheduled by the (scheduling) information. The third device may not perform sidelink transmission with overlapped time or slot as the resource(s) scheduled by the (scheduling) information. It may release half-duplex issue in this group. In other words, when the third device performs resource selection for its sidelink transmission, the third device could exclude occasion comprising resource(s) scheduled by the (scheduling) information.

Preferably, the general 1st stage SCI and the general 2nd stage SCI, transmitted from the first device, could be utilized for scheduling or assigning sidelink data transmission(s) from the first device. The general 1st stage SCI may be decodable by all devices supporting sidelink. The general 1st stage SCI could be transmitted or delivered via PSCCH transmission. The general 2nd stage SCI could be transmitted or delivered via PSSCH structure. The general 1st stage SCI may mean SCI format 0-1. The general 2nd stage SCI may mean SCI format 0-2.

Method *b*

The general concept of Method *b* is that a first device (e.g. UE A) could transmit or deliver a sidelink control information to a second device (e.g. UE B), wherein the sidelink control information assigns, schedules, indicates, or comprises a set of sidelink resource(s). The sidelink control information may indicate that part of the set of sidelink resource(s) may be utilized by the second device to perform sidelink data transmission(s). The sidelink data transmission(s) from the second device may comprise or include sidelink data packet for at least the first device. Alternatively, the sidelink data transmission(s) from the second device may comprise or include sidelink data packet for a third device. In other words, the sidelink control information may indicate transmitter device switch for part of the set of sidelink resource(s).

Preferably, if or when the sidelink control information does not indicate a transmitter device switch, the first device may utilize the set of sidelink resource(s) for performing sidelink data transmission(s) to the second device. If or when the sidelink control information indicates a transmitter device switch, the first device may utilize a first part of the set of sidelink resource(s) for performing sidelink data transmission(s) to the second device. The remaining part of the set of sidelink resource(s) may be assigned, given, or left for the second device to perform sidelink data transmission(s). The first part of the set of sidelink resource(s) may comprise or mean the sidelink resource in the same TTI of the sidelink control information. The remaining part of the set of sidelink resource(s) may comprise or mean the sidelink resource(s) not in the same TTI of the sidelink control information.

Preferably, the frequency size of the first part of the set of sidelink resource(s) may be the same as the frequency size of the remaining part of the set of sidelink resource(s). Alternatively, the frequency size of the first part of the set of sidelink resource(s) may be different from the frequency size of the remaining part of the set of sidelink resource(s). The frequency size of the first part of the set of sidelink resource(s) may be (within) single sub-channel. The frequency size of the remaining part(s) of the set of sidelink resource(s) may be the same with each other. Preferably, the frequency size of a sidelink resource may mean, imply, or represent the number of sub-channel(s) or PRB(s) comprised in the sidelink resource.

Preferably, the sidelink control information may be divide into 1st stage SCI and 2nd stage SCI. The sidelink control information may be transmitted or delivered via 1st stage SCI carried on sidelink control transmission and 2nd stage SCI carried on sidelink transmission. The 1st stage SCI and the 2nd stage SCI may be transmitted or delivered in the same TTI.

Preferably, the first device and the second device may have sidelink connection with or between each other. The first device may have a unicast link or connection with the second device. The second device may have a unicast link or connection with the third device. The first device may have a unicast link or connection with the third device. Alternatively, the first device may not have a unicast link or connection with the third device.

Preferably, the first device may have a groupcast link or connection with the second device. The first device and the second device are belonging to or within a sidelink group. In other words, member devices in the sidelink group may comprise at least the first device and the second device. The third device may belong to or may be within the sidelink group. Alternatively, the third device may not belong to or may not be within the sidelink group.

Preferably, when the second device receives the sidelink control information, the second device may transmit or deliver a feedback to the first device. The feedback may be utilized to inform the first device whether the second device receives the sidelink control information. When the second device receives the sidelink control information, the second device may transmit or deliver a HARQ-ACK feedback as ACK or NACK to the first device. When the second device does not receive the sidelink control information, the second device may not transmit or deliver HARQ-ACK feedback to the first device, and in aspect of first device, it may mean DTX.

Preferably, the second device may perform a sidelink feedback transmission on a sidelink feedback resource for transmitting or delivering the feedback. The sidelink feedback transmission may be PSFCH.

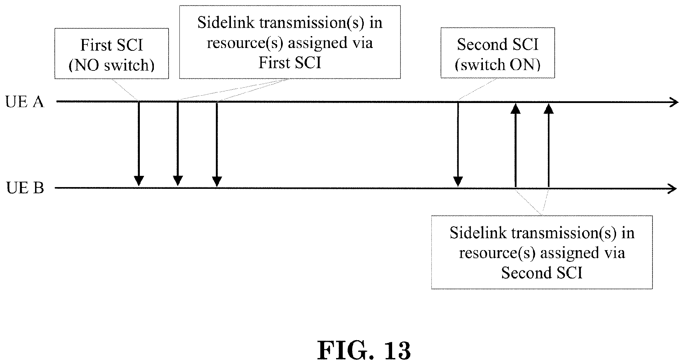

In the example shown in FIG. 13, UE A may transmit a first SCI indicating no transmitter device switch. UE A may perform sidelink transmission(s) in the sidelink resource(s) scheduled or assigned by the first SCI. UE A may transmit a second SCI indicating a transmitter device switch. UE A may perform sidelink transmission in the first sidelink resource scheduled or assigned by the second SCI. Preferably, the UE A may perform sidelink transmission in the first sidelink resource which is in the same TTI with the second SCI. When UE B receives the second SCI, the second device may perform sidelink transmission(s) in the remaining sidelink resource(s) scheduled or assigned by the second SCI (to the first device). Upon reception or detection of the (scheduling) information, UE B may or may not transmit feedback associated with reception or delivery of the sidelink control information.

Preferably, when the first device operates or configures in network scheduling mode (e.g. sidelink mode 1), the first device may need to acquire, from network, the set of sidelink resources. The network node may transmit a SL grant to the first device. The SL grant may indicate, assign, or schedule the set of sidelink resource(s).

In one approach, the first device may perform a resource selection procedure. The resource selection procedure may be performed for selecting the first part and the remaining part of set of sidelink resource(s). Preferably, the frequency size of the first part of the set of sidelink resource(s) may be different from the frequency size of the remaining part of the set of sidelink resource(s). The frequency size of the first part of the set of sidelink resource(s) may be within single sub-channel. The frequency size of the remaining part(s) of the set of sidelink resource(s) may be the same with each other.

In one approach, the first device may perform a first resource selection procedure and perform a second resource selection procedure. The first resource selection procedure may be performed for selecting the first part of the set of sidelink resource(s). The second resource selection procedure may be performed for selecting the remaining part of the set of sidelink resource(s). Preferably, the frequency size of the first part of the set of sidelink resource(s) may be different from the frequency size of the remaining part of the set of sidelink resource(s). The frequency size of the first part of the set of sidelink resource(s) may be within single sub-channel. The frequency size of the remaining part(s) of the set of sidelink resource(s) may be the same with each other.

Preferably, at least one field or one bit or code-point(s) in sidelink control information may be utilized to indicate whether transmitter device is switched or not. The one field or the one bit or the code-point(s) may be reserved bit or code-point(s) in sidelink control information.

**For all above concepts, methods, alternatives and embodiments:**

The first device, the second device, and/or the third device could be a vehicle UE, pedestrian UE, TX UE, or RSU performing sidelink transmission. Furthermore, the first device, the second device, and/or the third device could be a pedestrian UE, battery concerned UE, or UE concerning power saving. The network could be a gNB, eNB, base station, network node, or TRP. The sidelink transmission could be transmitted via PC5 interface.

Preferably, a sidelink transmission being unicast may imply that the sidelink transmission includes or indicates a ID for the pair or peer device (e.g., L1/L2-destination ID). Furthermore, a sidelink transmission being groupcast may imply that the sidelink transmission includes or indicates a ID for the group.

Preferably, each slot in a sidelink resource pool could be denoted with index tx, x=1, 2, .... The slot with index tx and the slot with index tx+i may be consecutive slots or nonconsecutive slots in the time domain.

Preferably, one field or one code point in a sidelink control information (e.g., 1st stage SCI and/or 2nd stage SCI) could indicate whether the signal and/or the set of resource(s) is scheduled for the second device (rather than that the signal and/or the set of resource(s) being scheduled for or being used by a transmitter device, the first device).

Preferably, each resource in the set of resource(s) may be within the sidelink resource pool. Each resource in the set of resource(s) may be one slot and one sub-channel. Each resource in the set of resource(s) may comprise a number of (consecutive) slots (in the sidelink resource pool) and a number of (consecutive) sub-channel(s) (in the sidelink resource pool).

Preferably, a first resource in the set of resource(s) could be non-contiguous in time domain in the sidelink resource pool with a second resource in the set of resource(s). A first resource in the set of resource(s) could be contiguous in time domain in the sidelink resource pool with a second resource in the set of resource(s).

Preferably, the second resource may be the closest resource in time domain in the set of resource(s) compared to the first resource. The second resource may be the consecutive or next resource to the first resource in time domain in the set of resource(s). Alternatively, the first resource may be non-contiguous in time domain in the sidelink resource pool with the second resource.

Preferably, a reference time may be associated to the set of resource(s). The reference time could be a slot, subframe, or frame. The reference time could be in a frame with SFN=0 and/or DFN=0. The reference time could be the first slot and/or the first subframe in the frame with SFN=0 and DFN=0. The reference time could be the time, slot, subframe of frame, first symbol, or last symbol where the second device receives the signal.

Preferably, a reference SCS may be associated to the set of resource(s). The signal could indicate the reference SCS. The reference SCS could be associated to a SL BWP comprising the sidelink resource pool or could be associated to the sidelink resource pool.

Preferably, an available interval or an available duration for the set of resource(s) starts from an applying time. The applying time could be the same as the reference time. The available interval or the available duration for the set of resource(s) could be (pre-)configured. The available interval or the available duration for the set of resource(s) could be explicitly or implicitly indicated by the signal. The signal could also indicate a repeated number for repeating a bit-map. The repeated number and/ the length of the bit map (in time domain) could be the available interval or the available duration for the set of resource(s).

Preferably, when a candidate resource is within the available interval or the available duration for the set of resource(s), the second device could perform resource selection for the candidate resource based on the signal. When a candidate resource is outside the available interval or the available duration for the set of resource(s), the second device may not perform resource selection for the candidate resource based on the signal. Each priority could associate with an available interval or an available duration for the set of resource(s).

Preferably, the signal could indicate the set of resource(s) by a 2D bit-map. Each bit in the 2D bit-map may be associated with a resource in the set of resource(s) or associated with a resource with single slot, single sub-channel in the set of resource(s). Each bit in the 2D bit-map with value 1 may indicate a resource in the set of resource(s). The set of resource(s) may comprise resource(s) indicated by (repeating) the 2D bit-map.

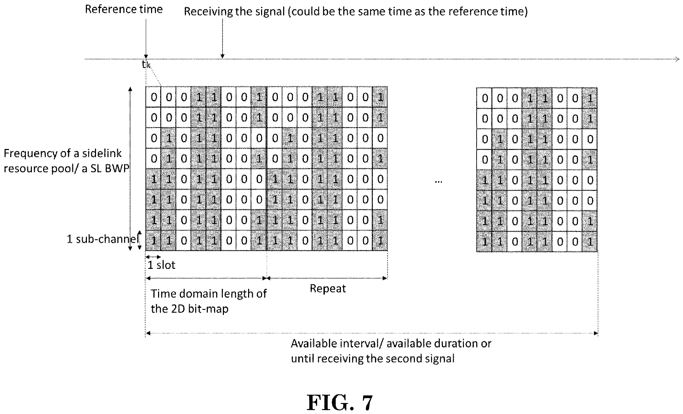

For example, as shown in the example in FIG. 7, the reference time or slot for the set of resource(s) could be tk, which could be the same time when the second device receives the signal. Time domain length of the 2D bit-map is 8 bits and frequency domain length of the 2D bit-map is 8 bits (which equals to number of sub-channels in the sidelink resource pool). The set of resources are illustrated in gray with indicated value one by the 2D bit-map. The second device derives the set of resources by repeating the 2D bit-map.

Preferably, time domain length of the 2D bit-map (e.g., number of bits of the 2D bitmap indicates time domain resource for the set of resource(s)) may be aligned with length of a pool bit-map indicating time domain resource for the sidelink resource pool. Time domain length of the 2D bit-map could be multiple times (in integer) the length of the pool bit-map indicating time domain resource for the sidelink resource pool. The 2D bit-map could repeat until the second device receives a second signal from the first device indicating an updated the set of resource(s). The second device could apply the 2D bit-map within the available time or available interval. Length of the available time or available interval may be aligned with time domain length of the 2D bit-map. Length of the available time or available interval may be multiple times (in integer) the time domain length of the 2D bit-map. The second device could repeat the 2D bit-map until the second device receives a second signal from the first device indicating update the set of resource(s).

Alternatively, the signal could indicate the set of resource(s) by a bit-map. Preferably, each bit in the bit-map could be associated with a plurality of resources in the set of resource(s) or associated with a plurality of resources in a single slot in the set of resource(s). Each bit in the bit-map with value 1 could indicate a plurality of resources (in a single slot) in the set of resource(s). The plurality of resource(s) (in a single slot) in the set of resource(s) could be whole sub-channel(s) or partial sub-channel(s). The set of resource(s) may comprise resource(s) indicated by (repeating) the bit-map.

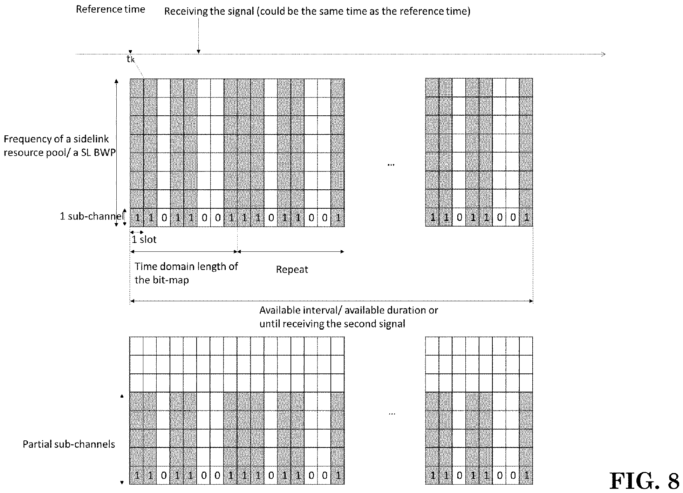

For example, as shown in the example in FIG. 8, the reference time or slot for the set of resource(s) could be tk, which could be the same time when the second device receives the signal. Time domain length of the bit-map is 8 bits. The set of resources are illustrated in gray with indicated value one by the bit-map. The second device could derive the set of resources by repeating the bit-map. Time domain length of the bit-map (e.g., number of bits of the bitmap indicates time domain resource for the set of resource(s)) may be aligned with length of a pool bit-map indicating time domain resource for the sidelink resource pool. Time domain length of the bit-map could be multiple times (in integer) the length of the pool bit-map indicating time domain resource for the sidelink resource pool. The bit-map could repeat until the second device receives a second signal from the first device indicating an updated the set of resource(s). The second device could apply the bit-map within the available time or available interval. Length of the available time or available interval may be aligned with time domain length of the bit-map. Length of the available time or available interval could be multiple times (in integer) the time domain length of the bit-map. The second device could repeat the bit-map until the second device receives a second signal from the first device indicating update the set of resource(s).

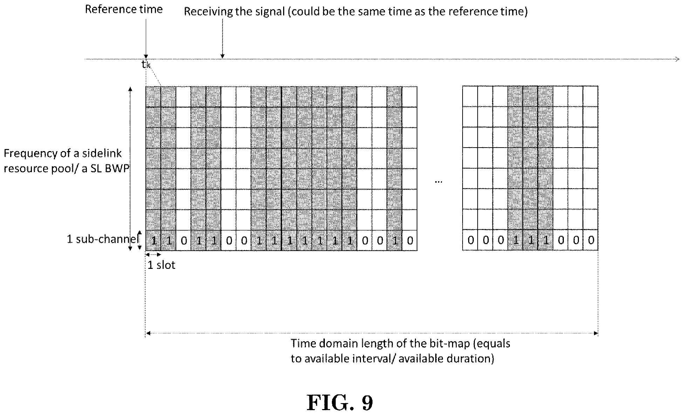

Alternatively, the signal could indicate the set of resource(s) by a bit-map. The available interval and/or the available duration for the set of resources could be equal to the length of the bit-map. For example, as shown in FIG. 9 the second device could derive the set of resources based on gray color with indicated value one by the bit-map.

Any of above concepts, alternatives and embodiments may be combined or applied simultaneously.

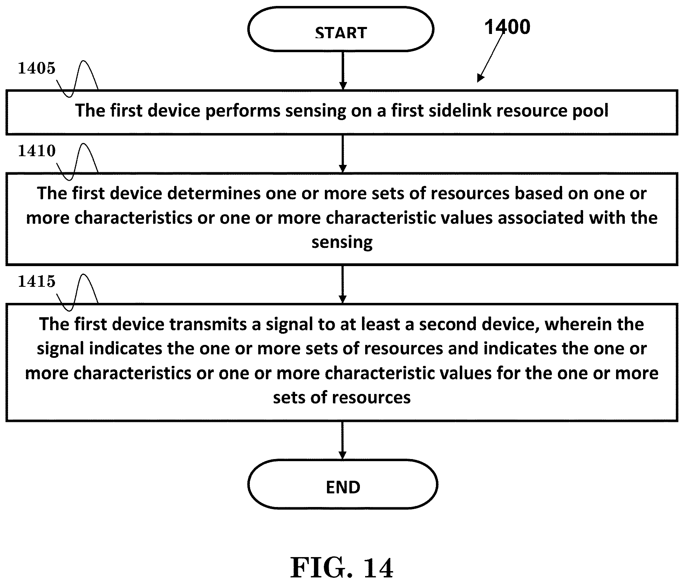

FIG. 14 is a flow chart 1400 according to one exemplary embodiment from the perspective of a first device performing sidelink communication. In step 1405, the first device performs sensing on a first sidelink resource pool. In step 1410, the first device determines one or more sets of resources based on one or more characteristic or one or more characteristic values associated with the sensing. In step 1415, the first device transmits a signal to at least a second device, wherein the signal indicates the one or more sets of resources and indicates the one or more characteristics or one or more characteristic values for the one or more sets of resources.

Preferably, the one or more one characteristics could be priority used to perform the sensing, or the one or more characteristic values could be priority value used to perform the sensing. Preferably, the one or more one characteristics could be Reference Signal Received Power (RSRP) or RSRP level detected in the sensing, or the one or more characteristic values could be RSRP or RSRP level detected in the sensing.

Preferably, the one or more one characteristic(s) could be any of the following values:

- geographic distance level;

- RSRP level,

- Channel Busy Ratio (CBR) range or value,

- carrier index,

- sidelink resource pool index, sidelink Bandwidth Part (BWP) index,

- an entry in the inter-carrier frequency list,

- group index for a group performing groupcast sidelink transmission,

- L1/L2 source index of the first device,

- one or more L1 or L2 destination index of the one or more device(s); and/or

- member Identity (ID) of the one or more device(s) in a group for groupcast sidelink transmission.

Preferably, the signal could be transmitted via a broadcast sidelink transmission or a groupcast sidelink transmission or a unicast sidelink transmission.

Preferably, the signal is transmitted via one or more Medium Access Control (MAC) Control Element (CE) or a second stage SCI. Preferably, the signal is transmitted via one or more specific sidelink control information multiplexed with one or more sidelink data transmissions.

Referring back to FIGS. 3 and 4, in one exemplary embodiment of a first device performing sidelink communication. The first device 300 includes a program code 312 stored in the memory 310. The CPU 308 could execute program code 312 to enable the first device (i) to perform sensing on a first sidelink resource pool, (ii) to determine one or more sets of resources based on one or more characteristics or one or more characteristic values associated with the sensing, and (iii) to transmit a signal to at least a second device, wherein the signal indicates the one or more sets of resources and indicates the one or more characteristics or one or more characteristic values for the one or more sets of resources. Furthermore, the CPU 308 can execute the program code 312 to perform all of the above-described actions and steps or others described herein.

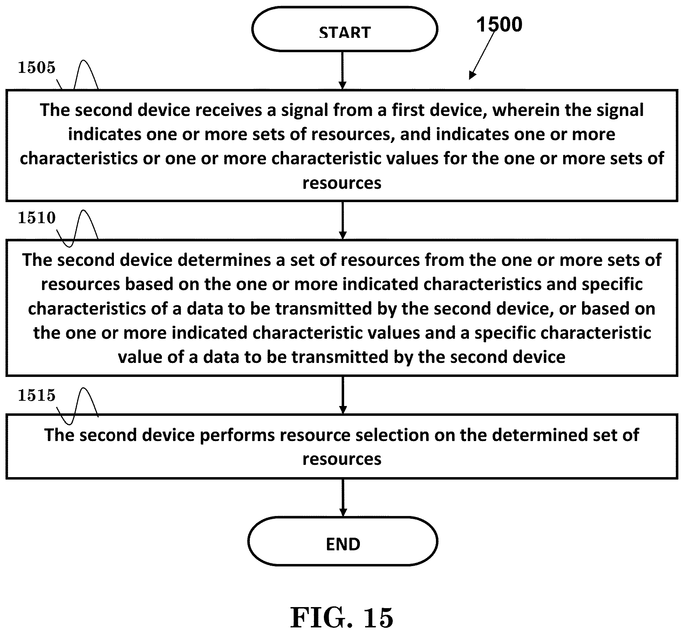

FIG. 15 is a flow chart 1500 according to one exemplary embodiment from the perspective of a second device performing sidelink communication. In step 1505, the second device receives a signal from a first device, wherein the signal indicates one or more sets of resources, and indicates one or more characteristics or one or more characteristic values for the one or more sets of resources. In step 1510, the second device determines a set of resources from the one or more sets of resources based on the one or more indicated characteristics and specific characteristics of a data to be transmitted by the second device, or based on the one or more indicated characteristic values and a specific characteristic value of a data to be transmitted by the second device. In step 1515, the second device performs resource selection on the determined set of resources.

Preferably, the one or more one characteristics could be priority, or the one or more characteristic values could be priority value. Preferably, the one or more one characteristics could be Reference Signal Received Power (RSRP) or RSRP level, or the one or more characteristic values could be RSRP or RSRP level.

Preferably, the one or more one characteristics or the one or more characteristic values is any of the following values:

- geographic distance level, RSRP level;

- Channel Busy Ratio (CBR) range or value;

- carrier index;

- sidelink resource pool index;

- sidelink Bandwidth Part (BWP) index;

- an entry in the inter-carrier frequency list;

- group index for a group performing groupcast sidelink transmission;

- L1/L2 source index of the first device;

- one or more L1 or L2 destination index of the one or more device(s); and/or

- member Identity (ID) of the one or more device(s) in a group for groupcast sidelink transmission.

Preferably, when the data with a first priority comes in the second device, the determined set of resources could be associated to the first priority. If the second device performs sidelink transmission or reception on a second sidelink resource pool, the second device could determine the set of resources associated to the second sidelink resource pool. Furthermore, the second device could determine the set of resources associated to the second device's member Identity (ID) in a group, wherein the group comprises a plurality of devices for performing groupcast sidelink transmission.

Preferably, the signal could be transmitted via a broadcast sidelink transmission or a groupcast sidelink transmission or a unicast sidelink transmission.

Preferably, the signal is transmitted via one or more Medium Access Control (MAC) Control Element (CE) or a second stage SCI. Preferably, the signal is transmitted via one or more specific sidelink control information multiplexed with one or more sidelink data transmissions.

Referring back to FIGS. 3 and 4, in one exemplary embodiment of a second device performing sidelink communication. The second device 300 includes a program code 312 stored in the memory 310. The CPU 308 could execute program code 312 to enable the second device (i) to receive a signal from a first device, wherein the signal indicates one or more sets of resources, and indicates one or more characteristics or one or more characteristic values for the one or more sets of resources, (ii) to determine a set of resources from the one or more sets of resources based on the one or more indicated characteristics and specific characteristics of a data to be transmitted by the second device, or based on the one or more indicated characteristic values and a specific characteristic value of a data to be transmitted by the second device, and (iii) to perform resource selection on the determined set of resources. Furthermore, the CPU 308 can execute the program code 312 to perform all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method of a first device performing sidelink transmission, comprising:

   the first device performs sensing on a first sidelink resource pool (1405);
   the first device determines one or more sets of resources based on one or more characteristics or one or more characteristic values associated with the sensing (1410); and
   the first device transmits a signal to at least a second device, wherein the signal indicates the one or more sets of resources and indicates the one or more characteristics or one or more characteristic values for the one or more sets of resources (1415).

2. The method of claim 1, wherein the one or more one characteristics is priority used to perform the sensing, or the one or more characteristic values is priority value used to perform the sensing.

3. The method of claim 1 or 2, wherein the one or more one characteristics or the one or more characteristic values is Reference Signal Received Power, in the following also referred to as RSRP, or RSRP level detected in the sensing.

4. The method of any one of claims 1 to 3, wherein the one or more one characteristics or the one or more characteristic values is any of the following values: geographic distance level, RSRP level, Channel Busy Ratio, in the following also referred to as CBR, range or value, carrier index, sidelink resource pool index, sidelink Bandwidth Part, in the following also referred to as BWP, index, an entry in the inter-carrier frequency list, group index for a group performing groupcast sidelink transmission, L1/L2 source index of the first device, one or more L1 or L2 destination index of the one or more device(s), or member Identity, in the following also referred to as ID, of the one or more device(s) in a group for groupcast sidelink transmission.

5. The method of any one of claims 1 to 4, wherein the signal is transmitted via a broadcast sidelink transmission or a groupcast sidelink transmission or a unicast sidelink transmission; and/or
   wherein the signal is transmitted via one or more Medium Access Control, in the following also referred to as MAC, Control Elements, in the following also referred to as CE, or via one or more specific sidelink control information multiplexed with one or more sidelink data transmissions.

6. A method of a second device performing sidelink transmission, comprising:

   the second device receives a signal from a first device, wherein the signal indicates one or more sets of resources, and indicates one or more characteristics or one or more characteristic values for the one or more sets of resources (1505);
   the second device determines a set of resources from the one or more sets of resources based on the one or more indicated characteristics and specific characteristics of a data to be transmitted by the second device, or based on the one or more indicated characteristic values and a specific characteristic value of a data to be transmitted by the second device (1510); and
   the second device performs resource selection on the determined set of resources (1515).

7. The method of claim 6, wherein the one or more one characteristics is priority, or the one or more characteristic values is priority value.

8. The method of claim 6 or 7, wherein the one or more one characteristics or the one or more characteristic values is Reference Signal Received Power, in the following also referred to as RSRP, or RSRP level.

9. The method of any one of claims 6 to 8, wherein the one or more one characteristics or the one or more characteristic values is any of the following values: geographic distance level, RSRP level, Channel Busy Ratio, in the following also referred to as CBR, range or value, carrier index, sidelink resource pool index, sidelink Bandwidth Part, in the following also referred to as BWP, index, an entry in the inter-carrier frequency list, group index for a group performing groupcast sidelink transmission, L1/L2 source index of the first device, one or more L1 or L2 destination index of the one or more device(s), or member Identity, in the following also referred to as ID, of the one or more device(s) in a group for groupcast sidelink transmission.

**10.** The method of any one of claims 6 to 9, wherein when the data with a first priority comes in the second device, the determined set of resources is associated to the first priority.

**11.** The method of any one of claims 6 to 10, wherein if the second device performs sidelink transmission or reception on a second sidelink resource pool, the second device determines the set of resources associated to the second sidelink resource pool.

**12.** The method of any one of claims 6 to 11, wherein the second device determines the set of resources associated to the second device's member ID in a group, wherein the group comprises a plurality of devices for performing groupcast sidelink transmission.

**13.** The method of any one of claims 6 to 12, wherein the signal is transmitted via a broadcast sidelink transmission or a groupcast sidelink transmission or a unicast sidelink transmission; and/or
wherein the signal is transmitted via one or more Medium Access Control, in the following also referred to as MAC, Control Elements, in the following also referred to as CE, or via one or more specific sidelink control information multiplexed with one or more sidelink data transmissions.

**14.** A first device for performing sidelink transmission, comprising:

a control circuit (306);
a processor (308) installed in the control circuit (306); and
a memory (310) installed in the control circuit (306) and operatively coupled to the processor (308);
wherein the processor (308) is configured to execute a program code (312) stored in the memory (310) to perform the method steps as defined in any one of claims 1 to 5.

**15.** A second device for performing sidelink transmission, comprising:

a control circuit (306);
a processor (308) installed in the control circuit (306); and
a memory (310) installed in the control circuit (306) and operatively coupled to the processor (308);
wherein the processor (308) is configured to execute a program code (312) stored in the memory (310) to perform the method steps as defined in any one of claims 6 to 13.

**FIG. 1**

FIG. 2

_300_

INPUT
DEVICE
_302_

OUTPUT
DEVICE
_304_

CONTROL CIRCUIT _306_

CPU _308_

MEMORY _310_

PROGRAM CODE _312_

TRANSCEIVER _314_

FIG. 3

PROGRAM CODE _312_

APPLICATION LAYER _400_

↕

LAYER 3 _402_

↕

LAYER 2 _404_

↕

LAYER 1 _406_

## FIG. 4

The second device receive the signal from the first device.
The signal indicates Priority, reserved period ($p\_r$), time gap

Triggered resource selection

$t_m$

n

$t_{m+gap}$    $t_{m+p\_r}$

Resource selection window

Frequency of a sidelink resource pool/ a SL BWP

$R_{tn+2,3}$

$R_{tn+2,2}$

$R_{tn+2,1}$

$R_{tn+2,0}$

$t_n$

$t_{n+2}$

$t_{m+gap}$

$t_{m+p\_r}$

**FIG. 5**

The second device receive the signal from the first device.
The signal indicates tx1, ty1

Triggered resource selection

$t_m$

n  tx

$t_y$

Resource selection window

Frequency of a sidelink resource pool/ a SL BWP

$R_{tn+2,3}$

$R_{tn+2,2}$

$R_{tn+2,1}$

$R_{tn+2,0}$

$t_n$                     $t_{n+2}$                          $t_y$

# FIG. 6

FIG. 7

FIG. 8

FIG. 9

FIG. 10

**FIG. 11**

FIG. 12

FIG. 13

```
                    ┌──────────────────┐      1400
                    │      START       │
                    └──────────────────┘
                             │
1405                         ▼
┌────────────────────────────────────────────────────────────────┐
│  The first device performs sensing on a first sidelink resource pool │
└────────────────────────────────────────────────────────────────┘
1410                         │
                             ▼
┌────────────────────────────────────────────────────────────────┐
│  The first device determines one or more sets of resources based on one or │
│  more characteristics or one or more characteristic values associated with the │
│                              sensing                            │
└────────────────────────────────────────────────────────────────┘
1415                         │
                             ▼
┌────────────────────────────────────────────────────────────────┐
│  The first device transmits a signal to at least a second device, wherein the │
│  signal indicates the one or more sets of resources and indicates the one or │
│  more characteristics or one or more characteristic values for the one or more │
│                         sets of resources                      │
└────────────────────────────────────────────────────────────────┘
                             │
                             ▼
                    ┌──────────────────┐
                    │       END        │
                    └──────────────────┘
```

## FIG. 14

START

1500

1505

The second device receives a signal from a first device, wherein the signal indicates one or more sets of resources, and indicates one or more characteristics or one or more characteristic values for the one or more sets of resources

1510

The second device determines a set of resources from the one or more sets of resources based on the one or more indicated characteristics and specific characteristics of a data to be transmitted by the second device, or based on the one or more indicated characteristic values and a specific characteristic value of a data to be transmitted by the second device

1515

The second device performs resource selection on the determined set of resources

END

FIG. 15

Europäisches
Patentamt

European
Patent Office

Office européen
des brevets

**EUROPEAN SEARCH REPORT**

Application Number

EP 21 15 4659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | INTEL CORPORATION: "Further Considerations on Sidelink Unicast/Groupcast/Broadcast for NR V2X Communication", 3GPP DRAFT; R1-1812492 INTEL - EV2X_SL_UGB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051554436, Retrieved from the Internet: URL:http://www.3gpp.org/ftp/Meetings%5F3GP P%5FSYNC/RAN1/Docs/R1%2D1812492%2Ezip [retrieved on 2018-11-11] | 1,3-6,8, 9,11-15 | INV. H04W76/14 H04L1/18 ADD. H04W72/10 H04W72/04 |
| Y | * paragraph [0002] - paragraph [0003] * | 2,7,10 | |

-----

-/--

**TECHNICAL FIELDS SEARCHED (IPC)**

H04W
H04L

The present search report has been drawn up for all claims

| Place of search | Date of completion of the search | Examiner |
|---|---|---|
| The Hague | 8 July 2021 | Tsapelis, Athanasios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | INTEL CORPORATION: "Physical Layer Procedures for NR V2X Sidelink Communication", 3GPP DRAFT; R1-1812489 INTEL - EV2X_SL_L1_PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051554433, Retrieved from the Internet: URL:http://www.3gpp.org/ftp/Meetings%5F3GP P%5FSYNC/RAN1/Docs/R1%2D1812489%2Ezip [retrieved on 2018-11-11] * paragraph [0002] * | 1,3,6,9, 14,15 | |
| Y | HUAWEI ET AL: "Sidelink physical layer procedures for NR V2X", 3GPP DRAFT; R1-1910059, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20191014 - 20191020 8 October 2019 (2019-10-08), XP051809069, Retrieved from the Internet: URL:https://ftp.3gpp.org/tsg_ran/WG1_RL1/T SGR1_98b/Docs/R1-1910059.zip R1-1910059.docx [retrieved on 2019-10-08] * paragraph [0002] * | 2,7,10 | TECHNICAL FIELDS SEARCHED (IPC) |

-/--

The present search report has been drawn up for all claims

| Place of search | Date of completion of the search | Examiner |
|---|---|---|
| The Hague | 8 July 2021 | Tsapelis, Athanasios |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

| | Europäisches Patentamt European Patent Office Office européen des brevets | **EUROPEAN SEARCH REPORT** | Application Number EP 21 15 4659 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | INTEL CORPORATION: "Sidelink Resource Allocation Mode-2 Design for NR V2X Communication", 3GPP DRAFT; R1-1906796 INTEL - EV2X_SL_M2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 13 May 2019 (2019-05-13), XP051728247, Retrieved from the Internet: URL:http://www.3gpp.org/ftp/Meetings%5F3GPP%5FSYNC/RAN1/Docs/R1%2D1906796%2Ezip [retrieved on 2019-05-13] * paragraph [0002] * ----- | 1,6,14, 15 | |
| A | HUAWEI ET AL: "Sidelink physical layer structure for NR V2X", 3GPP DRAFT; R1-1901536, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 March 2019 (2019-03-01), pages 1-12, XP051599233, Retrieved from the Internet: URL:http://www.3gpp.org/ftp/tsg%5Fran/WG1%5FRL1/TSGR1%5F96/Docs/R1%2D1901536%2Ezip * paragraph [0003] - paragraph [0005] * ----- | 1,6,14, 15 | TECHNICAL FIELDS SEARCHED (IPC) |

The present search report has been drawn up for all claims

| Place of search | Date of completion of the search | Examiner |
|---|---|---|
| The Hague | 8 July 2021 | Tsapelis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)